(19) Europäisches Patentamt
European Patent Office
Office européen des brevets

(11) **EP 4 648 417 A1**

(12) **EUROPEAN PATENT APPLICATION**
published in accordance with Art. 153(4) EPC

(43) Date of publication:
**12.11.2025 Bulletin 2025/46**

(21) Application number: **24738695.6**

(22) Date of filing: **03.01.2024**

(51) International Patent Classification (IPC):
**H04N 19/59** (2014.01)    **H04N 19/117** (2014.01)
**H04N 19/159** (2014.01)

(52) Cooperative Patent Classification (CPC):
**H04N 19/117; H04N 19/159; H04N 19/59**

(86) International application number:
**PCT/KR2024/000093**

(87) International publication number:
**WO 2024/147625 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2023 KR 20230001028**

(71) Applicant: **LG Electronics Inc.**
**Yeongdeungpo-gu**
**Seoul 07336 (KR)**

(72) Inventors:
• **CHOI, Jangwon**
  **Seoul 06772 (KR)**
• **YOO, Sunmi**
  **Seoul 06772 (KR)**
• **HONG, Myungoh**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD BASED ON INTRA PREDICTION, METHOD FOR TRANSMITTING BITSTREAM, AND RECORDING MEDIUM STORING BITSTREAM**

(57)     An image encoding/decoding method and apparatus are provided. The image decoding method according to the present disclosure comprises the steps of: generating a residual block for the current block; generating a prediction block for the current block on the basis of an intra prediction mode; and reconstructing the current block on the basis of the residual block and the prediction block, wherein the prediction block is generated further on the basis of an interpolation filter applied to a reference sample, the interpolation filter is adaptively determined on the basis of the intra prediction mode, and the interpolation filter may be determined to be a 6-tap cubic filter on the basis of the intra prediction mode being a template-based intra mode derivation (TIMD)-based directional intra prediction mode.

FIG. 7

```
Start
   ↓
Interpolation filter-based intra prediction, TIMD
template matching or reference sample lining          — S710
   ↓
Check condition for interpolation filter selection    — S720
   ↓
        Cubic (or weak)              S730
N ◁——   interpolation filter   ——▷
                  │ Y
                  ↓
Apply 64 or 32 fractional sample position-based 6-    — S740
tap cubic interpolation filter
   ↓
End
```

**Description**

[Technical Field]

The present disclosure relates to an image encoding/decoding method based on intra prediction, a method for transmitting a bitstream and a recording medium storing a bitstream, and more specifically, relates to intra prediction mode-based image coding through optimized interpolation filter selection.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

The present disclosure is to provide an image encoding/decoding method and apparatus based on intra prediction and an interpolation filter.

The present disclosure is to provide an image encoding/decoding method and apparatus for adaptively determining an interpolation filter according to an intra prediction mode.

In addition, the present disclosure is to provide an image encoding/decoding method and apparatus that may reduce the waste of memory space for storing an interpolation filter coefficient.

The present disclosure is to provide a nontransitory computer-readable recording medium for storing a bitstream generated by the image encoding method or apparatus according to the present disclosure.

The present disclosure is to provide a nontransitory computer-readable recording medium for storing a bitstream which is received and decoded by the image decoding apparatus according to the present disclosure and used for image reconstruction.

The present disclosure is to provide a method for transmitting a bitstream which is generated by the image encoding method or apparatus according to the present disclosure.

The technical problems to be achieved in the present disclosure are not limited to the technical problems described above, and other technical problems not described may be clearly understood by those of ordinary skill in the art from the following descriptions.

[Technical Solution]

An image decoding method according to an aspect of the present disclosure includes generating a residual block for a current block, generating a prediction block for the current block based on an intra prediction mode and reconstructing the current block based on the residual block and the prediction block, wherein the prediction block is generated further based on an interpolation filter applied to a reference sample, the interpolation filter is adaptively determined based on the intra prediction mode, and based on the intra prediction mode being a template-based intra mode derivation (TIMD)-based directional intra prediction mode, the interpolation filter may be determined as a 6-tap cubic filter.

An image encoding method according to another aspect of the present disclosure includes determining an intra prediction mode of a current block, generating an intra prediction block of the current block based on the intra prediction mode and encoding information on the intra prediction mode, wherein the prediction block is generated further based on an interpolation filter applied to a reference sample, the interpolation filter is adaptively determined based on the intra prediction mode, and based on the intra prediction mode being a template-based intra mode derivation (TIMD)-based directional intra prediction mode, the interpolation filter may be determined as a 6-tap cubic filter.

According to another embodiment of the present disclosure, a computer-readable recording medium may store a bitstream generated by the image encoding method or the image encoding apparatus of the present disclosure.

According to another embodiment of the present disclosure, a transmission method may transmit a bitstream generated by the image encoding apparatus or the image encoding method of the present disclosure.

The features of the present disclosure briefly summarized above are merely exemplary embodiments described in detail below and are not intended to limit the range of the present disclosure.

[Advantageous Effects]

According to the present disclosure, an image encoding/decoding method and apparatus with improved encoding/decoding efficiency may be provided.

In addition, according to the present disclosure, an image encoding/decoding method and apparatus based on intra prediction and an interpolation filter may be provided.

In addition, according to the present disclosure, an image encoding/decoding method and apparatus that may select an interpolation filter more efficiently in intra prediction may be provided.

In addition, according to the present disclosure, an image encoding/decoding method and apparatus that may reduce the waste of memory space for storing an interpolation filter coefficient may be provided.

According to the present disclosure, a nontransitory computer-readable recording medium for storing a bitstream generated by the image encoding method or apparatus according to the present disclosure may be provided.

According to the present disclosure, a nontransitory computer-readable recording medium for storing a bitstream which is received and decoded by the image decoding apparatus according to the present disclosure and used for image reconstruction may be provided.

According to the present disclosure, a method of transmitting a bitstream generated by the image encoding method or apparatus according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 shows a flowchart of an example of an intra prediction mode signaling method in an encoding apparatus.

FIG. 5 shows a flowchart of an example of an intra prediction mode determination method in a decoding apparatus.

FIG. 6 shows a diagram of an example of neighboring blocks used for deriving an MPM list.

FIGS. 7 to 11 are a diagram showing an image encoding method and/or an image decoding method according to an embodiment of the present disclosure.

FIG. 12 is a diagram showing an image decoding method according to an embodiment of the present disclosure.

FIG. 13 is a diagram showing an image encoding method according to an embodiment of the present disclosure.

FIG. 14 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar drawing symbol have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an $M \times N$ block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

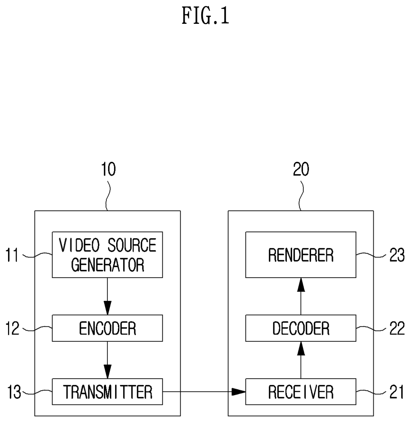

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

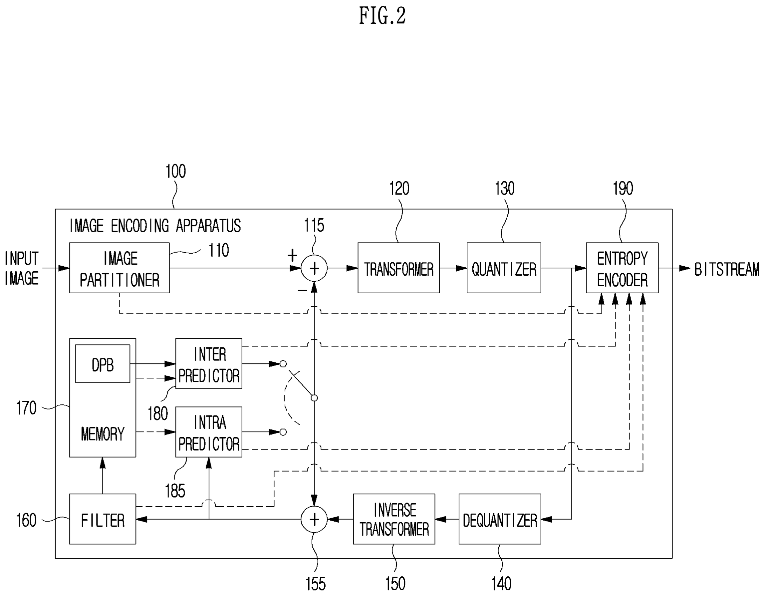

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a prereconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc.

A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

### Overview of the image decoding apparatus

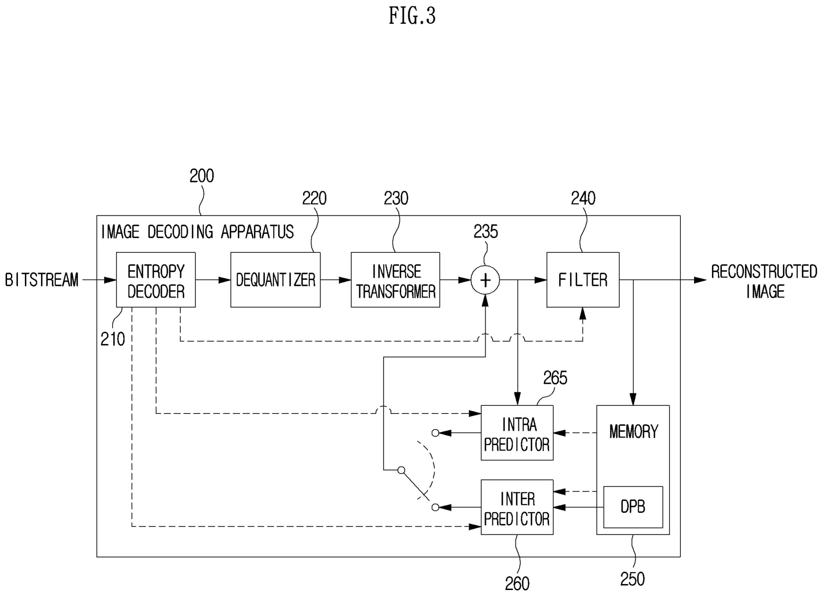

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

**Intra Prediction Mode/Type Determination**

When intra prediction is applied, an intra prediction mode to be applied to a current block may be determined by using intra prediction mode of a neighboring block. For example, a decoding apparatus may select one of most probable mode (MPM) candidates within an MPM list, which is derived based on the intra prediction mode of a neighboring block (e.g., left and/or above neighboring block) of the current block and additional candidate modes, based on a received MPM index. Alternatively, one of remaining intra prediction modes, which are not included in the MPM candidates (and a planar mode), may be selected based on remaining intra prediction mode information. The MPM list may be configured to include or exclude the planar mode as a candidate. For example, when the MPM list includes the planar mode as a candidate, the MPM list may have six candidates, and when the MPM list excludes the planar mode as a candidate, the MPM list may have three candidates. When the MPM list excludes the planar mode as a candidate, a not planar flag (i.e., intra_luma_not_planar_flag) indicating whether the intra prediction mode of the current block is not the planar mode may be signaled. For example, an MPM flag may be signaled first, and the MPM index and the not planar flag may be signaled when the value of the MPM flag is 1. In addition, the MPM index may be signaled when the value of the not planar flag is 1. Here, the configuration in which the MPM list excludes the planar mode as a candidate does not mean that the planar mode is not considered as an MPM, but rather, since the planar mode is always considered as an MPM, the not planar flag is signaled first to determine whether the mode is the planar mode first.

For example, whether the intra prediction mode applied to the current block is among the MPM candidates (and the planar mode) or among the remaining mode may be indicated based on an MPM flag (e.g., intra_luma_mpm_flag). A value of 1 for the MPM flag may indicate that the intra prediction mode for the current block is within the MPM candidates (and the planar mode), and a value of 0 for the MPM flag may indicate that the intra prediction mode for the current block is not within the MPM candidates (and the planar mode). A value of 0 for the not planar flag (i.e., intra_luma_not_planar_flag) may indicate that the intra prediction mode for the current block is the planar mode, and a value of 1 for the not planar flag may indicate that the intra prediction mode for the current block is not the planar mode. The MPM index may be signaled in the form of a syntax element such as mpm_idx or intra_luma_mpm_idx, and the remaining intra prediction mode information may be signaled in the form of a syntax element such as rem_intra_luma_pred_mode or intra_luma_mpm_remainder. For example, the remaining intra prediction mode information may indicate one of the remaining intra prediction modes that are not included in the MPM candidates (and the planar mode), indexed in order of prediction mode numbers among all intra prediction modes. The intra prediction mode may be an intra prediction mode for a luma component (sample). Hereinafter, the intra prediction mode information may include at least one of the MPM flag (i.e., intra_luma_mpm_flag), the not planar flag (i.e., intra_luma_not_planar_flag), the MPM index (i.e., mpm_idx or intra_luma_mpm_idx), and the remaining intra prediction mode information (i.e., rem_intra_luma_pred_mode or intra _luma_mpm_remainder). In present disclosure, the MPM list may also be referred to by various terms such as MPM candidate list or candModeList. When MIP is applied to the current block, a separate MPM flag (i.e., intra_mip_mpm_flag), MPM index (i.e., intra_mip_mpm_idx), and remaining intra prediction mode information (i.e., intra_mip_mpm_remainder) for MIP may be signaled, and the not planar flag may not be signaled.

The intra prediction mode signaling procedure in the encoding apparatus and the intra prediction mode determination procedure in the decoding apparatus may be performed as an example below.

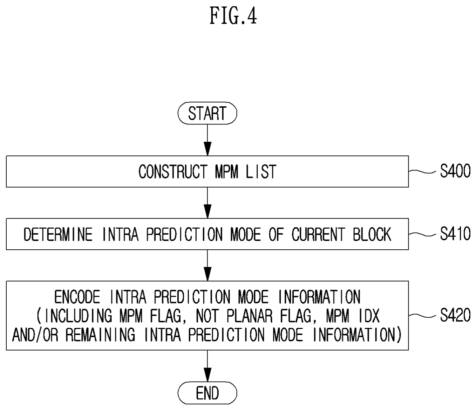

FIG. 4 shows a flowchart of an example of an intra prediction mode signaling method in an encoding apparatus.

Referring to FIG. 4, the encoding apparatus constructs an MPM list for a current block S400. The MPM list may include candidate intra prediction modes (MPM candidates) that have a high possibility of being applied to the current block. The MPM list may include intra prediction mode of a neighboring block, and may additionally include specific intra prediction modes according to a predetermined method. The specific method for configuring the MPM list will be described later.

The encoding apparatus determines an intra prediction mode of the current block S410. The encoding apparatus may perform prediction based on various intra prediction modes and may determine an optimal intra prediction mode based on rate-distortion optimization (RDO). In this case, the encoding apparatus may determine the optimal intra prediction mode by using only the MPM candidates included in the MPM list and the planar mode, or may determine the optimal intra prediction mode by additionally using the remaining intra prediction modes in addition to the MPM candidates included in the MPM list and the planar mode. Specifically, for example, when the intra prediction type of the current block is a specific type (i.e., LIP, MRL, or ISP) rather than a normal intra prediction type, the encoding apparatus may determine the optimal intra prediction mode by considering only the MPM candidates and the planar mode as the intra prediction mode candidates for the current block. In other words, in this case, the intra prediction mode for the current block may be determined only from among the MPM candidates and the planar mode, and the MPM flag may not be encoded/signaled in this case. The decoding apparatus, in this case, may estimate that the MPM flag is 1 without receiving the MPM flag separately.

Meanwhile, in general, when the intra prediction mode of the current block is not the planar mode and is one of the MPM candidates in the MPM list, the encoding apparatus generates an MPM index (mpm idx) indicating one of the MPM candidates.

When the intra prediction mode of the current block is not included in the MPM list either, the encoding apparatus generates remaining intra prediction mode information that indicates a mode among the remaining intra prediction modes not included in the MPM list (and the planar mode), which is the same as the intra prediction mode of the current block.

The encoding apparatus may encode the intra prediction mode information and output it in the form of a bitstream. The intra prediction mode information may include the above-described MPM flag, not planar flag, MPM index, and/or remaining intra prediction mode information. In general, the MPM index and the remaining intra prediction mode information are in an alternative relationship and may not be signaled simultaneously for indicating the intra prediction mode of a block. In other words, the MPM flag value 1 may be signaled along with the not planar flag or the MPM index, and the MPM flag value 0 may be signaled along with the remaining intra prediction mode information. However, as described above, when a specific intra prediction type is applied to the current block, the MPM flag may not be signaled, and only the not planar flag and/or the MPM index may be signaled. In other words, in this case, the intra prediction mode information may include only the not planar flag and/or the MPM index.

The decoding apparatus may determine an intra prediction mode corresponding to the intra prediction mode information determined and signaled by the encoding apparatus.

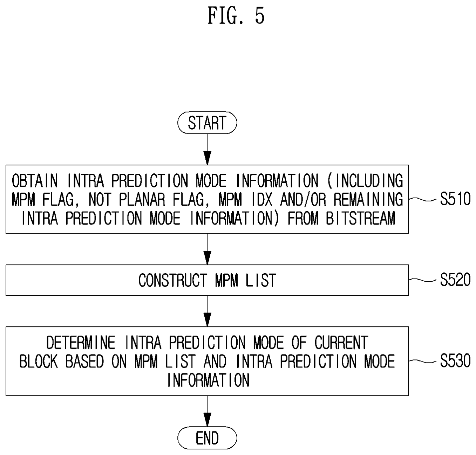

FIG. 5 shows a flowchart of an example of an intra prediction mode determination method in a decoding apparatus.

Referring to FIG. 5, the decoding apparatus obtains intra prediction mode information from a bitstream S500. The intra prediction mode information may include at least one of an MPM flag, a not planar flag, an MPM index, and remaining intra prediction mode, as described above.

The decoding apparatus constructs an MPM list S510. The MPM list is configured in the same manner as the MPM list configured by the encoding apparatus. In other words, the MPM list may include an intra prediction mode of a neighboring block and may further include specific intra prediction modes according to a predetermined method. The specific method for configuring the MPM list will be described later.

Although S510 is illustrated as being performed after S500, this is merely an example, and S510 may be performed before or simultaneously with S500.

The decoding apparatus determines an intra prediction mode of the current block based on the MPM list and the intra prediction mode information S520. As an example, when the value of the MPM flag is 1, the decoding apparatus may derive the planar mode as the intra prediction mode of the current block (based on the not planar flag), or may derive a candidate indicated by the MPM index among the MPM candidates in the MPM list as the intra prediction mode of the current block. In another example, when the value of the MPM flag is 0, the decoding apparatus may derive an intra prediction mode indicated by the remaining intra prediction mode information from among the remaining intra prediction modes not included in the MPM list and the planar mode as the intra prediction mode of the current block. Meanwhile, in another example, when the intra prediction type of the current block is a specific type (i.e., LIP, MRL, IST, etc.), the decoding apparatus may derive, without checking the MPM flag, the planar mode or a candidate indicated by the MPM index in the MPM list as the intra prediction mode of the current block.

For example, the not planar flag may be signaled when MRL is not applied to the current block (i.e., when intra_luma_ref_idx == 0), and the not planar flag may be omitted when MRL is applied to the current block (i.e., when intra_luma_ref_idx != 0). When the not planar flag is omitted, its value may be estimated as 1 by the decoding apparatus.

Meanwhile, intra prediction modes may include two directional intra prediction modes and 65 directional prediction modes. The non-directional intra prediction modes may include a planar intra prediction mode and a DC intra prediction mode, and the directional intra prediction modes may include intra prediction modes numbered from 2 to 66. The extended directional intra prediction mode may be applied to blocks of all sizes and may be applied to both luma and chroma components.

Meanwhile, in addition to the intra prediction modes described above, the intra prediction mode may further include a cross-component linear model (CCLM) mode for a chroma sample. The CCLM mode may be classified into LT_CCLM, L_CCLM, and T_CCLM depending on whether left samples, top samples, or both are considered for deriving a LM parameter, and it may be applied only to a chroma component.

The intra prediction modes, for example, may be indexed as shown in Table 1 below.

[Table 1]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, and MIP, as described above. The intra prediction type may be indicated based on intra prediction type information, and the intra prediction type information may be implemented in various forms. As an example, the intra prediction type information may include intra prediction type index information indicating one of the intra prediction types. In another example, the intra prediction type information may include at least one of reference sample line information (i.e., intra_luma_ref_idx) indicating whether MRL is applied to the current block and, when applied, which reference sample line is used, an ISP flag (i.e., intra_subpartitions_mode_flag) indicating whether ISP is applied to the current block, ISP type information (i.e., intra_subpartitions_split_flag) indicating a split type of subpartitions when ISP is applied, a flag information indicating whether PDPC is applied, or a flag information indicating whether LIP is applied. In addition, the intra prediction type information may include an MIP flag (which may be referred to as intra_mip_flag) indicating whether MIP is applied to the current block. Meanwhile, as described above, when MIP is applied to the current block (i.e., when the value of intra_mip_flag is 1), an MPM list for MIP may be separately configured, and the intra prediction mode information for MIP may include an MPM flag referred to as intra_mip_mpm_flag, an MPM index referred to as intra_mip_mpm_idx, and remaining intra prediction mode information referred to as intra_mip_mpm_remainder.

In addition, various prediction modes may be used for MIP, and a matrix and an offset for MIP may be derived based on the intra prediction mode for MIP. As described above, the matrix may be referred to as a (MIP) weight matrix, and the offset may be referred to as a (MIP) offset vector or a (MIP) bias vector. The number of intra prediction modes for MIP may be differently set based on the size of the current block. For example, i) when the height and width of the current block (i.e., CB or TB) are both 4, 35 intra prediction modes (i.e., intra prediction mode 0 to 34) may be available, ii) when both the height and width of the current block are equal to or less than 8, 19 intra prediction modes (i.e., intra prediction mode 0 to 18) may be available, iii) in other cases, 11 intra prediction modes (i.e., intra prediction mode 0 to 10) may be available. For example, when the height and width of the current block are both 4, it may be referred to as block size type 0, when both the height and width of the current block are equal to or less than 8, it may be referred to as block size type 1, and in other cases, it may be referred to as block size type 2, and the number of intra prediction modes for MIP may be organized in the following table. However, this is merely an example, and the block size type and the number of available intra prediction modes may be changed. In the present disclosure, the intra prediction mode for MIP may be referred to as an MIP intra prediction mode, an MIP prediction mode, or an MIP mode.

[Table 2]

| block size type (MipSizeId) | number of MIP intra prediction modes | MIP intra prediction mode |
|---|---|---|
| 0 | 35 | 0...34 |
| 1 | 19 | 0...18 |

(continued)

| block size type (MipSizeId) | number of MIP intra prediction modes | MIP intra prediction mode |
|---|---|---|
| 2 | 11 | 0...10 |

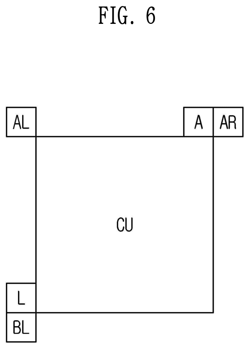

Meanwhile, in an enhanced compression model (ECM), a secondary MPM list has been introduced. The conventional primary MPM (PMPM) list includes six entries, and the secondary MPM (SMPM) list includes sixteen entries. First, a general MPM list having twenty-two entries is configured, and the first six entries in the general MPM list are included in the PMPM list, while the remaining entries are included in the SMPM list. The first entry in the general MPM list is a planar mode, and the remaining entries are composed of intra modes of neighboring blocks on the left (L), above (A), below-left (BL), above-right (AR), and above-left (AL), directional modes to which offsets are added from the first two available directional modes of the neighboring blocks, and a default mode, as described in FIG. 6. When a CU block is in a vertical direction, the order of neighboring blocks may be above (A), left (L), below-left (BL), above-right (AR), and above-left (AL). Otherwise, the order may be left (L), above (A), below-left (BL), above-right (AR), and above-left (AL).

A PMPM flag is parsed, and when its value is 1, a PMPM index may be parsed to determine which entry in the PMPM list is selected. Otherwise, an SPMPM flag may be parsed to determine whether to parse an SPMPM index or remaining modes.

### Neighboring Reference Sample Derivation

When intra prediction is applied to a current block, neighboring reference samples to be used for intra prediction of a current block may be derived. The neighboring reference samples of the current block may include a total of $2 \times nH$ samples adjacent to the left boundary and neighboring the bottom-left of a $nW \times nH$-sized current block, a total of $2 \times nW$ samples adjacent to the top boundary and neighboring the top-right of a current block and one sample neighboring the top-left of a current block. Alternatively, the neighboring reference samples of the current block may include top neighboring samples of a plurality of columns and left neighboring samples of a plurality of rows. In addition, the neighboring reference samples of the current block may include a total of nH samples adjacent to the right boundary of a nWxnH-sized current block, a total of nW samples adjacent to the bottom boundary of a current block, and one sample neighboring the bottom-right of a current block.

Meanwhile, when a MRL described below is applied, reference samples may be located on lines 1 to 3, not line 0 adjacent to a current block on the left/top, and in this case, the number of neighboring reference samples may increase further. The area and number of specific neighboring reference samples are described below.

Meanwhile, when ISP described below is applied, the neighboring reference samples may be derived in the unit of a sub-partition.

Some of the neighboring reference samples of a current block may not be decoded yet, or may not be available. In this case, a decoder may configure neighboring reference samples to be used for prediction through interpolation of available samples.

Some of the neighboring reference samples of a current block may not be decoded yet, or may not be available. In this case, a decoder may configure neighboring reference samples to be used for prediction through extrapolation of available samples. Until reaching a top-right reference sample starting from the bottom-left, they may be configured by substituting or padding a pixel that is not decoded yet or that is unavailable with the last available sample while updating a referenceable sample into the latest sample (the last available sample).

### Intra Prediction Mode/Type based Prediction Sample Derivation

A predictor of an encoding apparatus/decoding apparatus may derive a reference sample from an intra prediction mode of a current block among neighboring reference samples of a current block, and may generate a prediction sample of the current block based on the reference sample.

For example, (i) a prediction sample may be derived based on an average or interpolation of neighboring reference samples of a current block, and (ii) the prediction sample may be derived based on a reference sample located in a specific (prediction) direction among the neighboring reference samples of the current block. Case (i) may be referred to as a non-directional mode or a non-angular mode, and case (ii) may be referred to as a directional mode or an angular mode. In addition, the prediction sample may be generated by interpolation between a first neighboring sample and a second neighboring sample, the second neighboring sample being located in a direction opposite to the prediction direction of the intra prediction mode of the current block with respect to the prediction sample of the current block among the neighboring reference samples. The above-described case may be referred to as linear interpolation intra prediction (LIP). Additionally, a temporary prediction sample of the current block may be derived based on filtered neighboring reference samples, and a prediction sample of the current block may be derived by performing a weighted sum of the temporary prediction sample and at least one reference sample, derived by the intra prediction mode, among the conventional neighboring reference samples, in other words, unfiltered neighboring reference samples. The above-described case may be referred to as position dependent intra prediction (PDPC). In addition, among neighboring multiple reference sample line of the current block, a reference sample line with the highest prediction accuracy may be selected, and a prediction sample may be derived by using a reference sample located in the prediction direction on the selected line, and in this case, the intra prediction encoding may be performed by signaling the used reference sample line to the decoding apparatus. The above-described case may be referred to as multi-reference line intra prediction (MRL) or MRL-based intra prediction. Additionally, the current block may be divided into vertical or horizontal subpartitions, and intra prediction may be performed based on the same intra prediction mode, while neighboring reference samples may be derived and used in the subpartition unit. In this case, the intra prediction mode of a current block is applied in the same manner to the subpartitions, intra prediction performance may be improved by deriving and using a neighboring reference sample in the subpartition unit. This prediction method may be referred to as intra sub-partitions (IPS) or IPS-based intra prediction. Detailed description will be described later. In addition, when a prediction direction based on a prediction sample points the position between the neighboring reference samples, in other words, when the prediction direction points to a fractional sample position, a value of the prediction sample may be derived through interpolation of a plurality of reference samples located around the corresponding prediction direction (i.e., corresponding fractional sample position neighbor).

The above-described intra prediction methods may be referred to as intra prediction type, distinguished from intra prediction mode. The intra prediction type may also be referred to by various terms such as intra prediction technique or additional intra prediction mode. For example, the intra prediction type (or additional intra prediction mode, etc.) may include at least one of the above-described LIP, PDPC, MRL, or ISP. Information on the intra prediction type may be encoded by an encoding apparatus and included in a bitstream to be signaled to a decoding apparatus. The information on the intra prediction type may be implemented in various forms, such as flag information indicating whether each intra prediction type is applied, or index information indicating one of intra prediction type among multiple intra prediction types.

The MPM list for deriving the above-described intra prediction mode may be configured differently according to the intra prediction type. Alternatively, the MPM list may be commonly configured regardless of the intra prediction type.

**Neighboring Reference Sample Derivation**

When intra prediction is applied to a current block, neighboring reference samples to be used for intra prediction of a current block may be derived. The neighboring reference samples of the current block may include a total of $2 \times nH$ samples adjacent to the left boundary and neighboring the bottom-left of a nW$\times$nH-sized current block, a total of $2 \times nW$ samples adjacent to the top boundary and neighboring the top-right of a current block and one sample neighboring the top-left of a current block. Alternatively, the neighboring reference samples of the current block may include top neighboring samples of a plurality of columns and left neighboring samples of a plurality of rows. In addition, the neighboring reference samples of the current block may include a total of nH samples adjacent to the right boundary of a nWxnH-sized current block, a total of nW samples adjacent to the bottom boundary of a current block, and one sample neighboring the bottom-right of a current block.

Meanwhile, when a MRL described below is applied, reference samples may be located on lines 1 to 3, not line 0 adjacent to a current block on the left/top, and in this case, the number of neighboring reference samples may increase further. The area and number of specific neighboring reference samples are described below.

Meanwhile, when ISP described below is applied, the neighboring reference samples may be derived in the unit of a sub-partition.

**Reference Sample Filtering**

Meanwhile, filtering may be applied to the neighboring reference samples of a current block. It may be called pre-filtering in that it is applied to neighboring reference samples before intra prediction unlike postfiltering which is filtering applied to a prediction sample after intra prediction. Filtering for the neighboring reference samples may be called smoothing filtering, and may be performed, for example, as in Equation below.

```
[Equation 1]

the filtered sample values p[ x ][ y ]
```

with x = -1, y = -1..refH - 1 and x = 0..refW - 1, y = -1 are derived as follows:

p[ -1 ][ -1 ] = ( refUnfilt[ -1 ][ 0 ] + 2 * refUnfilt[ -1 ][ -1 ] + refUnfilt[ 0 ][ -1 ] + 2) >> 2  (1.3.4-1) p[ -1 ][ y ] = ( refUnfilt[ -1 ][ y + 1 ] + 2 * refUnfilt[ -1 ][ y ] + refUnfilt[ -1 ][ y - 1 ] + 2) >> 2 for y = 0..refH - 2 (1.3.4-2) p[ -1 ][ refH - 1 ] = refUnfilt[ -1 ][ refH - 1 ] (1.3.4-3) p[ x ][ -1 ] = ( refUnfilt[ x - 1 ][ -1 ] + 2 * refUnfilt[ x ][ -1 ] + refUnfilt[ x + 1 ][ -1 ] + 2) >> 2 for x = 0..refW - 2 (1.3.4-4) p[ refW - 1 ][ -1 ] = refUnfilt[ refW - 1 ][ -1 ] (1.3.4-5)

Here, refUnfilt represents neighboring reference samples that are not filtered yet, and [x][y] represents the x and y coordinates of a corresponding sample. For example, it may represent the coordinate when the top-left sample position coordinate of a current block is set as (0,0).

When filtering for the neighboring reference samples is applied, filtered neighboring reference samples may be used as reference samples in a prediction sample derivation step, and if filtering for the neighboring reference samples is not applied, unfiltered neighboring reference samples may be used as reference samples in the prediction sample derivation step.

The neighboring reference sample filtering may be applied, for example, when all or a part of the following specific conditions are satisfied.

- nTbW * nTbH is greater than 32
- cIdx is equal to 0
- IntraSubPartitionsSplitType is equal to ISP_NO_SPLIT
- one or more of the following conditions is true:
- predModeIntra is equal to INTRA_PLANAR
- predModeIntra is equal to INTRA_ANGULAR34
- predModeIntra is equal to INTRA _ANGULAR2 and nTbH is greater than or equal to nTbW
- predModeIntra is equal to INTRA _ANGULAR66 and nTbW is greater than or equal to nTbH

As an example, all procedures including determining an intra prediction mode/type, deriving a neighboring reference sample, deriving a prediction sample, etc. may be performed in the unit of a CU, and as another example, determining an intra prediction mode/type is performed in the unit of a CU, but procedures for deriving a neighboring reference sample and deriving a prediction sample may be performed in the unit of a TU basis within the CU. In this case, TUs within the CU may share the same intra prediction mode/type. Accordingly, considering this case, whether to filter the neighboring reference sample may be determined by considering nTbW and nTbH which are the width and height of a TU (or a TB).

**Reference Sample Filtering in ECM**

As described in JVET-D0119, 4-tap cubic interpolation is substituted with a 6-tap cubic interpolation filter to derive a prediction sample from a reference sample. In reference sample filtering, a 6-tap gaussian filter is applied to larger blocks (W >= 32 and H >= 32), and the existing VVC 4-tap gaussian filter is applied to other cases. Extended reference samples are derived by using a 4-tap interpolation filter instead of nearest neighbor rounding.

Embodiments of the present disclosure may be associated with intra prediction, reference sample filtering, reference sample filtering in ECM, etc. described above. Currently, when performing ECM intra prediction, an interpolation filter may be selected as follows.

- Gaussian Filter: 4-tap or 6-tap gaussian interpolation filter (Table 3 to Table 6)
- Cubic Filter: 4-tap or 6-tap cubic interpolation filter (Table 7 to Table 10)

Here, a gaussian filter may be associated with Tables 3 to 6 below.

[Table 3]

| Fractional sample position p | fG interpolation filter coefficients | | | | | |
|---|---|---|---|---|---|---|
| | $F_G[p][0]$ | $F_G[p][1]$ | $F_G[p][2]$ | $F_G[p][3]$ | $F_G[p][4]$ | $F_G[p][5]$ |
| p | 16- (p>>1) | 64-3* (p>>1), | 96-p | 64+p | 16+3*(p>> 1) | p>>1 |

[Table 4]

| Fractional sample position p | fG interpolation filter coefficients | | | |
|---|---|---|---|---|
| | $F_G[p][0]$ | $F_G[p][1]$ | $F_G[p][2]$ | $F_G[p][3]$ |
| p | 64-(p<<1) | 128- (p<<1) | 64+ (p<<1) | p<<1 |

[Table 5]

| Fractional sample position p | fG interpolation filter coefficients | | | | | |
|---|---|---|---|---|---|---|
| | $F_G[p][0]$ | $F_G[p][1]$ | $F_G[p][2]$ | $F_G[p][3]$ | $F_G[p][4]$ | $F_G[p][5]$ |
| p | 16-(p>>2) | 64-3* (p>>2), | 96- (p>>1) | 64+(p>>1) | 16+3*(p>> 2) | p>>2 |

[Table 6]

| Fractional sample position p | fG interpolation filter coefficients | | | |
|---|---|---|---|---|
| | $F_G[p][0]$ | $F_G[p][1]$ | $F_G[p][2]$ | $F_G[p][3]$ |
| p | 64-p | 128-p | 64+p | p |

Table 3 and Table 5 may relate to the filter coefficient of a 6-tap gaussian interpolation filter. In the following Table, p means a fractional sample position, and FG[p][0] to FG[p][5] may mean six filter coefficients corresponding to position p. Table 3 means a filter coefficient using a 32 fractional sample position, and Table 5 means a filter coefficient using a 64 fractional sample position. When a 130 directional mode which is twice a 65 directional mode in the existing VVC is used as in the extended intra prediction of ECM, i.e., TIMD, a 64 fractional sample position may be used, and in case of a 65 directional mode, a 32 fractional sample position may be used.

Table 4 and Table 6 may relate to the filter coefficient of a 4-tap gaussian interpolation filter. For a 4-tap, it may mean 4 filter coefficients corresponding to position p from FG[p][0] to FG[p][3].

Table 4 is a filter coefficient using a 32 fractional sample position, and Table 6 means a filter coefficient using a 64 fractional sample position, and when a 130 directional mode which is twice a 65 directional mode in the existing VVC is used as in the extended intra prediction of ECM, i.e., TIMD, a 64 fractional sample position may be used, and in case of a 65 directional mode, a 32 fractional sample position may be used.

In the current ECM, in calculating an intra prediction mode pixel through gaussian interpolation in a directional intra mode, a gaussian filter may be determined as follows.

- When the width of a current luma block (luma block) is greater than or equal to 32 and the height is greater than or equal to 32, use a 6-tap saussian filter For extended 130 directional intra prediction modes such as TIMD, use a 64 fractional sample position. In other cases, use a 32 fractional sample position.
- When the width of a current luma block is less than 32 or the height is less than 32, use a 4-tap saussian filter For extended 130 directional intra prediction modes as in TIMD, use a 64 fractional sample position. In other cases, use a 32 fractional sample position.

A cubic filter may be associated with Tables 7 to 10.

[Table 7]

| Fractional sample position p | fC interpolation filter coefficients | | | | | |
|---|---|---|---|---|---|---|
| | fc[ p ][ 0 ] | fc[ p ][ 1 ] | fc[ p ][ 2 ] | fc[ p ][ 3 ] | fc[ p ][ 4 ] | fc[ p ][ 5 ] |
| 0 | 0, | 0, | 256, | 0, | 0, | 0 |
| 1 | 0, | -4, | 253, | 9, | -2, | 0 |
| 2 | 1, | -7, | 249, | 17, | -4, | 0 |
| 3 | 1, | -10, | 245, | 25, | -6, | 1 |
| 4 | 1, | -13, | 241, | 34, | -8, | 1 |
| 5 | 2, | -16, | 235, | 44, | -10, | 1 |
| 6 | 2, | -18, | 229, | 53, | -12, | 2 |
| 7 | 2, | -20, | 223, | 63, | -14, | 2 |
| 8 | 2, | -22, | 217, | 72, | -15, | 2 |
| 9 | 3, | -23, | 209, | 82, | -17, | 2 |
| 10 | 3, | -24, | 202, | 92, | -19, | 2 |
| 11 | 3, | -25, | 194, | 101, | -20, | 3 |
| 12 | 3, | -25, | 185, | 111, | -21, | 3 |
| 13 | 3, | -26, | 178, | 121, | -23, | 3 |
| 14 | 3, | -25, | 168, | 131, | -24, | 3 |
| 15 | 3, | -25, | 159, | 141, | -25, | 3 |
| 16 | 3, | -25, | 150, | 150, | -25, | 3 |
| 17 | 3, | -25, | 141, | 159, | -25, | 3 |
| 18 | 3, | -24, | 131, | 168, | -25, | 3 |
| 19 | 3, | -23, | 121, | 178, | -26, | 3 |
| 20 | 3, | -21, | 111, | 185, | -25, | 3 |
| 21 | 3, | -20, | 101, | 194, | -25, | 3 |
| 22 | 2, | -19, | 92, | 202, | -24, | 3 |
| 23 | 2, | -17, | 82, | 209, | -23, | 3 |
| 24 | 2, | -15, | 72, | 217, | -22, | 2 |
| 25 | 2, | -14, | 63, | 223, | -20, | 2 |
| 26 | 2, | -12, | 53, | 229, | -18, | 2 |
| 27 | 1, | -10, | 44, | 235, | -16, | 2 |
| 28 | 1, | -8, | 34, | 241, | -13, | 1 |
| 29 | 1, | -6, | 25, | 245, | -10, | 1 |
| 30 | 0, | -4, | 17, | 249, | -7, | 1 |
| 31 | 0, | -2 | 9, | 253, | -4, | 0 |

[Table 8]

| Fractional sample position p | fC interpolation filter coefficients | | | | | |
|---|---|---|---|---|---|---|
| | fC[ p ][ 0 ] | fC[ p ][ 1 ] | fC[ p ][ 2 ] | fC[ p ][ 3 ] | fC[ p ][ 4 ] | fC[ p ][ 5 ] |
| 0 | 0. | 0. | 256, | 0. | 0. | 0 |
| 1 | 0. | -2. | 255. | 4. | -1. | 0 |
| 2 | 0. | -4, | 253, | 9. | -2. | 0 |
| 3 | 0. | -5. | 251. | 13. | -3. | 0 |
| 4 | 1. | -7, | 249, | 17, | -4. | 0 |
| 5 | 1. | -9. | 247. | 21. | -5. | 1 |
| 6 | 1. | -10. | 245, | 25. | -6. | 1 |
| 7 | 1. | -12. | 243, | 30. | -7. | 1 |
| 8 | 1. | -13. | 241. | 34. | -8. | 1 |
| 9 | 2. | -15. | 238. | 39. | -9. | 1 |
| 10 | 2. | -16. | 235, | 44, | -10. | 1 |
| 11 | 2. | -17. | 232, | 49. | -11. | 1 |
| 12 | 2. | -18. | 229. | 53. | -12. | 2 |
| 13 | 2. | -19. | 226, | 58. | -13. | 2 |
| 14 | 2. | -20. | 223, | 63. | -14. | 2 |
| 15 | 2. | -21. | 220, | 68. | -15. | 2 |
| 16 | 2. | -22. | 217, | 72. | -15. | 2 |
| 17 | 2. | -23, | 213, | 78, | -16. | 2 |
| 18 | 3. | -23. | 209. | 82. | -17. | 2 |
| 19 | 3. | -24. | 205. | 88. | -18. | 2 |
| 20 | 3. | -24, | 202. | 92. | -19, | 2 |
| 21 | 3. | -24. | 198. | 97. | -20. | 2 |
| 22 | 3. | -25. | 194. | 101. | -20. | 3 |
| 23 | 3. | -25. | 189. | 106. | -20. | 3 |
| 24 | 3. | -25, | 185. | 111. | -21. | 3 |
| 25 | 3. | -25. | 181. | 116. | -22. | 3 |
| 26 | 3. | -26. | 178. | 121. | -23. | 3 |
| 27 | 3. | -26. | 173. | 126. | -23. | 3 |
| 28 | 3. | -25. | 168. | 131. | -24. | 3 |
| 29 | 3. | -25. | 163. | 137. | -25. | 3 |
| 30 | 3. | -25. | 159. | 141. | -25. | 3 |
| 31 | 3. | -25. | 155. | 145. | -25. | 3 |
| 32 | 3. | -25. | 150. | 150. | -25. | 3 |
| 33 | 3. | -25. | 145. | 155. | -25. | 3 |
| 34 | 3. | -25. | 141. | 159. | -25. | 3 |
| 35 | 3. | -25. | 137. | 163. | -25. | 3 |
| 36 | 3. | -24. | 131. | 168. | -25. | 3 |
| 37 | 3. | -24. | 126. | 173. | -25. | 3 |
| 38 | 3. | -23. | 121. | 178. | -26. | 3 |
| 39 | 3. | -22. | 116. | 181. | -25. | 3 |
| 40 | 3. | -21. | 111. | 185. | -25. | 3 |
| 41 | 3. | -21. | 106. | 189. | -25. | 3 |
| 42 | 3. | -20. | 101. | 194. | -25. | 3 |
| 43 | 2. | -20. | 97. | 198. | -24. | 3 |
| 44 | 2. | -19. | 92. | 202. | -24. | 3 |
| 45 | 2. | -18. | 86, | 206. | -23. | 3 |
| 46 | 2. | -17. | 82. | 209. | -23. | 3 |
| 47 | 2. | -16. | 77. | 213. | -23. | 3 |
| 48 | 2. | -15. | 72, | 217. | -22. | 2 |
| 49 | 2. | -15. | 68. | 220. | -21. | 2 |
| 50 | 2. | -14. | 63. | 223. | -20. | 2 |
| 51 | 2. | -13. | 58. | 226. | -19. | 2 |
| 52 | 2. | -12. | 53, | 229. | -18. | 2 |
| 53 | 2. | -11. | 48. | 232. | -17. | 2 |
| 54 | 1. | -10. | 44. | 235. | -16. | 2 |
| 55 | 1. | -9, | 39. | 238. | -15. | 2 |
| 56 | 1. | -8. | 34. | 241. | -13. | 1 |
| 57 | 1. | -7. | 29. | 243. | -11. | 1 |
| 58 | 1. | -6. | 25. | 245. | -10. | 1 |
| 59 | 0. | -5. | 21. | 247. | -8. | 1 |
| 60 | 0. | -4, | 17. | 249. | -7. | 1 |
| 61 | 0. | -3. | 13. | 251. | -5. | 0 |
| 62 | 0. | -2. | 9. | 253. | -4. | 0 |
| 63 | 0. | -1, | 5. | 255. | -3. | 0 |

[Table 9]

| Fractional sample position p | fC interpolation filter coefficients | | | |
| --- | --- | --- | --- | --- |
| | fc[ p ][ 0 ] | fc[ p ][ 1 ] | fc[ p ][ 2 ] | fc[ p ][ 3 ] |
| 0 | 0. | 256. | 0. | 0 |
| 1 | -1. | 254. | 4. | -1 |
| 2 | -3. | 252. | 8. | -1 |
| 3 | -4. | 250. | 12. | -2 |
| 4 | -5. | 247. | 17. | -3 |
| 5 | -6. | 244. | 21. | -3 |
| 6 | -7. | 242. | 25. | -4 |
| 7 | -8. | 239. | 29. | -4 |
| 8 | -9. | 236. | 34. | -5 |
| 9 | -9. | 233. | 38. | -6 |
| 10 | -10. | 230. | 43. | -7 |
| 11 | -11. | 227. | 47. | -7 |
| 12 | -12. | 224. | 52. | -8 |
| 13 | -12. | 220. | 56. | -8 |
| 14 | -13. | 217. | 61. | -9 |
| 15 | -14. | 214. | 65. | -9 |
| 16 | -14. | 210. | 70. | -10 |
| 17 | -14. | 206. | 75. | -11 |
| 18 | -15. | 203. | 79. | -11 |
| 19 | -15. | 199. | 84. | -12 |
| 20 | -16. | 195. | 89. | -12 |
| 21 | -16. | 191. | 93. | -12 |
| 22 | -16. | 187. | 98. | -13 |
| 23 | -16. | 183. | 102. | -13 |
| 24 | -16. | 179. | 107. | -14 |
| 25 | -16. | 174. | 112. | -14 |
| 26 | -16. | 170. | 116. | -14 |
| 27 | -16. | 166. | 121. | -15 |
| 28 | -17. | 162. | 126. | -15 |
| 29 | -16. | 157. | 130. | -15 |
| 30 | -16. | 153. | 135. | -16 |
| 31 | -16. | 148. | 140. | -16 |
| 32 | -16. | 144. | 144. | -16 |
| 33 | -16. | 140. | 148. | -16 |
| 34 | -16. | 135. | 153. | -16 |
| 35 | -15. | 130. | 157. | -16 |
| 36 | -15. | 126. | 162. | -17 |
| 37 | -15. | 121. | 166. | -16 |
| 38 | -14. | 116. | 170. | -16 |
| 39 | -14. | 112. | 174. | -16 |
| 40 | -14. | 107. | 179. | -16 |
| 41 | -13. | 102. | 183. | -16 |
| 42 | -13. | 98. | 187. | -16 |
| 43 | -12. | 93. | 191. | -16 |
| 44 | -12. | 89. | 195. | -16 |
| 45 | -12. | 84. | 199. | -15 |
| 46 | -11. | 79. | 203. | -15 |
| 47 | -11. | 75. | 206. | -14 |
| 48 | -10. | 70. | 210. | -14 |
| 49 | -9. | 65. | 214. | -14 |
| 50 | -9. | 61. | 217. | -13 |
| 51 | -8. | 56. | 220. | -12 |
| 52 | -8. | 52. | 224. | -12 |
| 53 | -7. | 47. | 227. | -11 |
| 54 | -7. | 43. | 230. | -10 |
| 55 | -6. | 38. | 233. | -9 |
| 56 | -5. | 34. | 236. | -9 |
| 57 | -4. | 29. | 239. | -8 |
| 58 | -4. | 25. | 242. | -7 |
| 59 | -3. | 21. | 244. | -6 |
| 60 | -3. | 17. | 247. | -5 |
| 61 | -2. | 12. | 250. | -4 |
| 62 | -1. | 8. | 252. | -3 |
| 63 | -1. | 4. | 254. | -1 |

[Table 10]

| Fractional sample position p | fC interpolation filter coefficients | | | |
|---|---|---|---|---|
| | fc[ p ][ 0 ] | fc[ p ][ 1 ] | fc[ p ][ 2 ] | fc[ p ][ 3 ] |
| 0 | 0, | 64, | 0, | 0 |
| 1 | -1, | 64, | 1, | 0 |
| 2 | -3, | 65, | 3, | -1 |
| 3 | -3, | 63, | 5, | -1 |
| 4 | -4, | 63, | 6, | -1 |
| 5 | -5, | 62, | 9, | -2 |
| 6 | -5, | 60, | 11, | -2 |
| 7 | -5, | 58, | 13, | -2 |
| 8 | -6, | 57, | 16, | -3 |
| 9 | -6, | 55, | 18, | -3 |
| 10 | -7, | 54, | 21, | -4 |
| 11 | -7, | 52, | 23, | -4 |
| 12 | -6, | 48, | 26, | -4 |
| 13 | -7, | 47, | 29, | -5 |
| 14 | -6, | 43, | 32, | -5 |
| 15 | -6, | 41, | 34, | -5 |
| 16 | -5, | 37, | 37, | -5 |
| 17 | -5, | 34, | 41, | -6 |
| 18 | -5, | 32, | 43, | -6 |
| 19 | -5, | 29, | 47, | -7 |
| 20 | -4, | 26, | 48, | -6 |
| 21 | -4, | 23, | 52, | -7 |
| 22 | -4, | 21, | 54, | -7 |
| 23 | -3, | 18, | 55, | -6 |
| 24 | -3, | 16, | 57, | -6 |
| 25 | -2, | 13, | 58, | -5 |
| 26 | -2, | 11, | 60, | -5 |
| 27 | -2, | 9, | 62, | -5 |
| 28 | -1, | 6, | 63, | -4 |
| 29 | -1, | 5, | 63, | -3 |
| 30 | -1, | 3, | 65, | -3 |
| 31 | 0, | 1, | 64, | -1 |

Table 7 and Table 8 may relate to the filter coefficient of a 6-tap cubic interpolation filter. In the following Table, p means a fractional sample position, and fC[p][0] to fC[p][5] may mean six filter coefficients corresponding to position p. Table 7 is a filter coefficient using a 32 fractional sample position, and Table 8 may mean a filter coefficient using a 64 fractional sample position. As in the extended intra prediction of ECM, i.e., TIMD, when a 130 directional mode which is twice a 65 directional mode is used, a 64 fractional sample position may be used, and in case of a 65 directional mode, a 32 fractional sample position may be used.

In the current ECM, in calculating an intra prediction mode pixel through cubic interpolation in a directional intra mode, a cubic filter may be determined as follows.

-    For extended 130 directional intra prediction modes such as TIMD, use a 64 fractional sample position-based 6-tap cubic filter (Table 8) In other cases, use a 32 fractional sample position-based 6-tap cubic filter (Table 7)

Meanwhile, Table 9 may relate to the filter coefficient of a 4-tap cubic interpolation filter. In the following Table, p means a fractional sample position, and fC[p][0] to fC[p][3] may mean four filter coefficients corresponding to position p. In ECM, a 4-tap cubic interpolation filter is used for directional mode prediction in a reference sample area for template matching in TIMD, and a 64 fractional sample position-based 4-tap cubic filter may be used for extended 130 directional intra prediction modes.

Table 10 may relate to the filter coefficient of a 4-tap weak interpolation filter. In the following Table, p means a fractional sample position, and fC[p][0] to fC[p][3] may mean four filter coefficients corresponding to position p. A 32 fractional sample position-based 4-tap weak interpolation filter is used in ECM, and a corresponding filter mayn be used when arranging left and top reference samples on 1 line in directional intra mode prediction (reference sample lining). In other words, a reference sample pixel value at a corresponding position may be obtained when arranging in a straight line through a 4-tap weak interpolation filter instead of a nearest neighbor rounding method used in the existing method for arranging reference samples in a straight line such as HEVC or VVC.

As described above, in the current ECM, 4-tap and 6-tap gaussian and cubic filters are selected through complicated conditions. In particular, for a cubic filter, different types of filter coefficients are used in an intra directional mode, an intra directional mode in TIMD template matching and intra reference sample lining, which may cause the waste of memory space for storing a filter coefficient and the increased complexity of a filter selection method.

In order to solve this, the present disclosure proposes a method for efficiently selecting 4-tap and 6-tap interpolation filters for an intra prediction mode. Through a method proposed in the present disclosure, interpolation filter selection in intra prediction may be performed more efficiently to improve coding efficiency and reduce the waste of memory space for storing a filter coefficient.

## Embodiment

This embodiment proposes a method for efficiently selecting an interpolation filter when performing intra prediction. More specifically, it proposes a method for efficiently using 4-tap and 6-tap interpolation filters by unifying them.

As described above, when a 130 directional mode which is twice a 65 directional mode in the existing VVC is used as in the extended intra prediction of ECM, i.e., TIMD, a 64 fractional sample position-based 6-tap cubic filter may be used, and in case of a 65 directional mode, a 32 fractional sample position-based 6-tap cubic filter may be used.

In ECM, a 4-tap cubic interpolation filter is used for directional mode prediction in a reference sample area for template matching in TIMD, and a 64 fractional sample position-based 4-tap cubic filter may be used for extended 130 directional intra prediction modes.

In ECM, a 32 fractional sample position-based 4-tap weak interpolation filter (4-tap weak interpolation filter) may be used for reference sample lining.

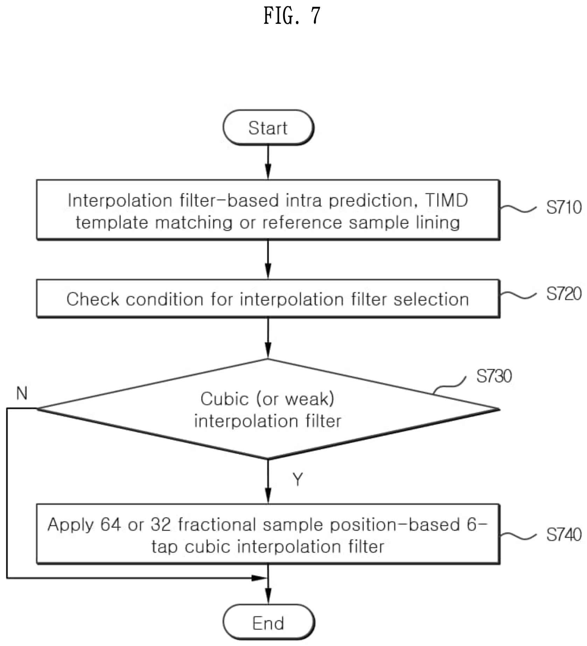

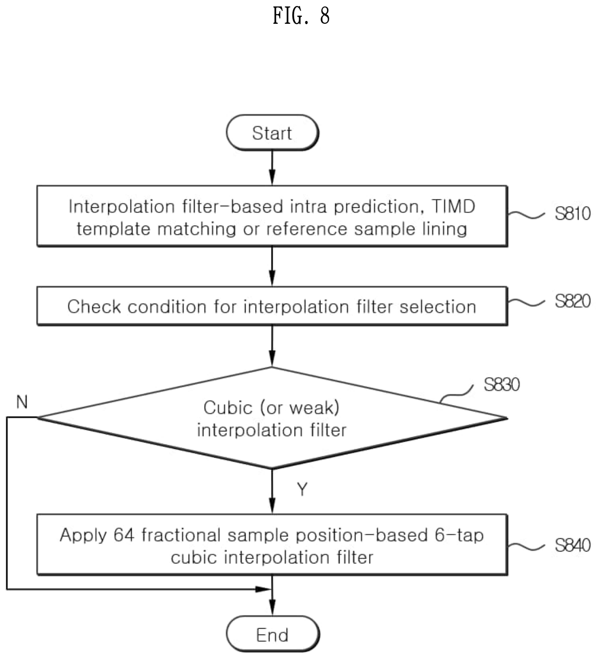

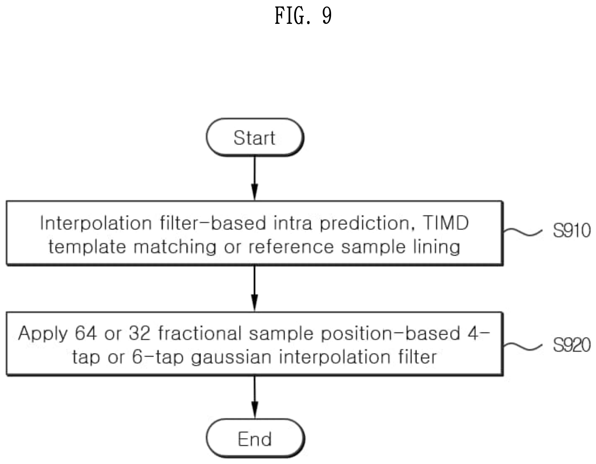

The following embodiment proposes a method for efficiently applying a method for using a cubic filter, i.e., a method for selecting a cubic filter by referring to FIGS. 7 to 9. FIGS. 7 to 9 are a diagram showing a method performed in an encoder and a decoder according to an embodiment of the present disclosure. FIGS. 7 to 9 may be an image encoding method or an image decoding method. As an example, FIGS. 7 to 9 may be based on interpolation filter-based intra prediction, TIMD template matching or reference sample lining S710, S810 and S910. The embodiment of FIGS. 7 to 9 is based on at least one of the three intra prediction modes being applicable to a current block.

Afterwards, a condition for selecting an interpolation filter may be confirmed S720 and S820. As an example, whether one of the three intra prediction modes described in the step is applied may be included in a condition for selecting an interpolation filter, and whether specific three intra prediction modes are applied may be indicated by separate information (e.g., the first information), and whether a rule for selecting an interpolation filter is applied when three intra prediction modes are applied may also be indicated by separate information (e.g., the second information). The first information and the second information may be explicitly signaled in a bitstream, or may be inferred by other information without being explicitly signaled.

First, as an embodiment, referring to FIGS. 7 to 9, whether a cubic or weak interpolation filter is applied may be determined S730 and S830, and a 64 or 32 fractional sample position-based 6-tap cubic interpolation filter may be applied according to a determination S740, or only a 64 fractional sample position-based 6-tap cubic interpolation filter may be applied S840, or a 64 or 32 fractional sample position-based 4-tap or 6-tap gaussian interpolation filter may be adaptively selected and applied S920. As an example, when a current block uses a 130 directional mode which is twice a 65 directional mode in VVC in performing prediction in an intra directional mode, a 64 fractional sample position-based 6-tap cubic filter may be used, and in case of a 65 directional mode, a 32 fractional sample position-based 6-tap cubic filter may be used. In addition, when performing prediction with template-based intra mode derivation (TIMD), a 64 fractional sample position-based 6-tap cubic filter may be used in directional mode prediction in a reference sample area for template matching. In addition, when reference sample lining is used, a 32 fractional sample position-based 6-tap cubic filter may be used. As in the example, a method is proposed that unifies the existing 4-tap cubic and weak filters into a 6-tap cubic filter. Through a proposed method, the same 6-tap cubic filter and filter coefficient may be applied to the embodiment of the present disclosure. As an example, by applying a 6-tap cubic filter in Tables 7 and 8 above to the embodiment of the present disclosure, a cubic filter selection process may be integrated by unifying cubic filters used in intra prediction into one 6-tap. In addition, since the existing 4-tap cubic filter is not used, the memory may be reduced by removing the filter coefficient storage space for a 4-tap cubic filter, and encoding and decoding efficiency may also be improved in intra prediction.

As another example, in order to further reduce the cubic filter coefficient storage memory in the example, a method is proposed that uses only a 64 fractional sample position-based 6-tap cubic filter as follows. In this case, in performing prediction in an intra directional mode, when a 130 directional mode which is twice a 65 directional mode in VVC is used, a 64 fractional sample position-based 6-tap cubic filter may be used, and in case of a 65 directional mode, a 64 fractional sample position-based 6-tap cubic filter may also be used. In this case, in case of a 65 directional mode, a fractional sample position may be modified to have a different value (e.g., twice) than before (e.g., a 32 fractional sample position). In this case, in TIMD, a 64 fractional sample position-based 6-tap cubic filter may be used in directional mode prediction in a reference sample area for template matching. In addition, a 64 fractional sample position-based 6-tap cubic filter may be used for reference sample lining. Also in this case, a fractional sample position may be modified to have a different value (e.g., twice) than before (e.g., a 32 fractional sample position).

According to the present disclosure, the existing 4-tap cubic and weak filters may be unified into a 6-tap cubic filter. As an example, by determining that only a 6-tap cubic filter coefficient in Table 8 is used for cubic filtering, a cubic filter selection process may be integrated by unifying cubic filters used in intra prediction into one 6-tap 64 fractional sample position-based filter. In addition, the memory may be reduced by removing storage space for other existing 4-tap cubic filter coefficients and removing storage space for a 6-tap cubic filter 32 fractional sample position-based filter coefficient, and encoding and decoding efficiency may also be improved in intra prediction.

Meanwhile, the coefficient of an integrated 6-tap cubic filter proposed in this embodiment is not limited to the example of Tables 7 to 10. In other words, the filter coefficient of Tables 7 to 10 corresponds to an example that may be applied to the present disclosure, so a filter coefficient described in the present disclosure may be different from the filter coefficient of Tables 7 to 10. In addition, a method proposed in this embodiment may be equally applied to a reference sample line applied in intra prediction fusion and multiple reference line (MRL).

Meanwhile, as another example, a method is proposed that changes a condition for applying a cubic filter in the example to a condition for applying a gaussian filter. In this case, in TIMD, a 64 fractional sample position-based 4-tap or 6-tap gaussian filter may be used in performing directional mode prediction in a reference sample area for template matching. In addition, a 32 fractional sample position-based 4-tap or 6-tap gaussian filter may be used for reference sample lining.

A gaussian filter may also be applied to TIMD template matching and reference sample lining which used only the existing 4-tap cubic filter as in the example. The coefficient of a 4-tap gaussian or 6-tap gaussian filter proposed in this embodiment is not limited to Tables 3 to 10 described above, and may have a different filter coefficient from that in the example. In addition, a method proposed in this embodiment may be equally applied to a reference sample line applied in intra prediction fusion and MRL. Whether to apply a method proposed in this embodiment may be transmitted in a VPS, a SPS, a PPS, a picture header, a slice header and DCI that are a high-level syntax (HLS). As an example, in order to determine whether to apply a method proposed in this embodiment in the unit of a PPS, information on whether to apply a method proposed in this embodiment may be transmitted to a PPS. Alternatively, information on whether to apply only a 6-tap cubic filter to each embodiment described above may be transmitted. Alternatively, information on whether to apply only a 6-tap cubic filter to each embodiment described above may be transmitted. As an example, whether to use only a 6-tap cubic filter may be determined through 1-bit flag additional information in a PPS. As an example, it may be determined whether to apply a proposed method independently in intra directional mode prediction and/or directional mode prediction in a reference sample area for template matching in TIMD and/or reference sample lining, respectively, through three 1-bit flag additional information in a PPS.

In addition, when implementing the embodiment, a decoder may adaptively select whether to apply a proposed embodiment when performing prediction in a specific intra mode according to a predefined rule without information additionally transmitted to a decoder, but conversely, whether to apply may be determined through additionally signaled information. As an example, whether to apply a method proposed in this embodiment in a specific unit (e.g., a CTU or a CU) may be signaled by a 1-bit flag. Alternatively, when a method proposed in this embodiment may be applied according to the size or shape of a specific block or whether a specific condition exists, whether to apply a method proposed in this embodiment in a specific intra mode may be transmitted to a decoder by using a 1-bit flag only in that case.

As an example, whether to transmit information on the application of a method proposed in this embodiment in a lower unit (e.g., a coding unit (CU)) may be adaptively selected according to information on whether to apply a method proposed in this embodiment at a high level defined in a high level syntax (HLS). As an example, when information representing whether to apply a method proposed in this embodiment included in a SPS is false (i.e., a method proposed in this embodiment is not used in the unit of a SPS), a method proposed in this embodiment in a low level unit, e.g., a coding unit, is not applied, and information representing whether to apply a method in a low level unit may not be signaled.

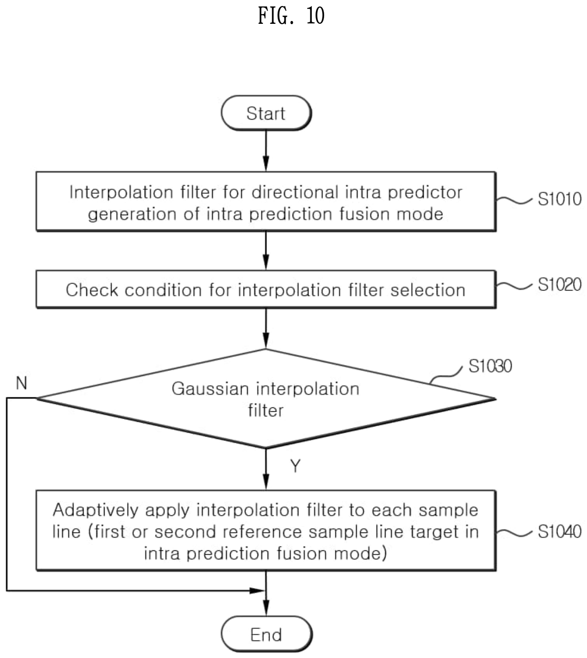

Another embodiment of the present disclosure below proposes a method for efficiently selecting an interpolation filter when performing intra prediction by referring to FIG. 10. An embodiment described by referring to FIG. 10 below proposes a method for efficiently selecting 4-tap and 6-tap interpolation filters when intra prediction fusion is performed on a current block. FIG. 10 is a diagram showing a method performed in an encoder and a decoder according to an embodiment of the present disclosure. FIG. 10 may be an image encoding method or an image decoding method.

As an example, FIG. 10 may be based on an interpolation filter for generating directional intra prediction in an intra prediction fusion mode S1010. The embodiment of FIG. 10 is based on at least one of the intra prediction fusion modes being applicable to a current block. According to FIG. 10, when intra prediction fusion is applied in a directional intra prediction mode, the interpolation filtering of the first reference sample line and the second reference sample line may be required. For this, a condition for selecting an interpolation filter may be confirmed S1020. A condition for selecting an interpolation filter may include whether an intra prediction fusion mode is applied.

As an example, in this case, since the trends of the first reference sample line and the second reference sample line are different, a different interpolation filter technique may be required. This embodiment proposes a method for adaptively applying the interpolation filtering of the first reference sample line and the second reference sample line in intra prediction fusion. In other words, a method proposed in this embodiment may apply the interpolation filter of the first reference sample line and the second reference sample line differently.

As described above, in the current ECM, when a 130 directional mode which is twice a 65 directional mode in the existing VVC is used as in the extended intra prediction, i.e., TIMD, a 64 fractional sample position-based 6-tap cubic filter is used, and in case of a 65 directional mode, a 32 fractional sample position-based 6-tap cubic filter is used.

In addition, in ECM, a 4-tap cubic interpolation filter is used for directional mode prediction in a reference sample area for template matching in TIMD, and a 64 fractional sample position-based 4-tap cubic filter is used for extended 130 directional intra prediction modes.

In addition, in ECM, a 32 fractional sample position-based 4-tap weak interpolation filter is used for reference sample lining.

In this embodiment, it may be determined whether a gaussian interpolation filter is applied when applying an intra prediction fusion mode S1030. Hereinafter, a method is proposed that adaptively applies an interpolation filter when a gaussian filter is selected in intra prediction fusion S1040.

As an example, in the first reference sample line, when the width of a current luma block is greater than or equal to a specific value (e.g., X1) and the height is greater than or equal to a specific value (e.g., Y1 which is the same as or different from X1), a 6-tap gaussian filter is used, and in other cases, a 4-tap gaussian filter may be used. In addition, in the second reference sample line, when the width of a current luma block is greater than or equal to a specific value (e.g., X2) and the height is greater than or equal to a specific value (e.g., Y2 which is the same as or different from X2), a 6-tap gaussian filter may be used, and in other cases, a 4-tap gaussian filter may be used. Here, in case of extended 130 directional intra prediction modes such as TIMD, a 64 fractional sample position is used, and in other cases, a 32 fractional sample position may be used. Alternatively, only a 6-tap or 4-tap gaussian filter may always be applied in the second reference sample line as follows.

As another example, according to the present disclosure, in the first reference sample line, when the width of a current luma block is greater than or equal to X1 and the height is greater than or equal to Y1, a 6-tap gaussian filter may be used. In other cases, a 4-tap gaussian filter may be used. In the second reference sample line, a 6-tap or 4-tap gaussian filter may always be used. Here, in case of extended 130 directional intra prediction modes such as TIMD, a 64 fractional sample position may be used. In other cases, a 32 fractional sample position may be used. Alternatively, only a 6-tap or 4-tap gaussian filter may always be applied in the first reference sample line as follows.

In addition, as another example, according to the present disclosure, a 6-tap or 4-tap gaussian filter may always be used in the first reference sample line. In the second reference sample line, when the width of a current luma block is greater than or equal to X2 and the height is greater than or equal to Y2, a 6-tap gaussian filter may be used. In other cases, a 4-tap gaussian filter may be used. In this case, in case of extended 130 directional intra prediction modes such as TIMD, a 64 fractional sample position may be used. In other cases, a 32 fractional sample position may be used. In other words, when applying intra prediction fusion, a block size condition for applying 4-tap and 6-tap gaussian filters may be different according to a reference sample line. In the method, X1, Y1, X2 and Y2 may be a value within a block size range, respectively. As an example, when a CTU size is 256, X1, Y1, X2 and Y2 may have a value between 4 and 256, and may be a different value.

Alternatively, a cubic filter and/or a gaussian filter may be adaptively applied in the first and second reference sample lines as follows. In the first reference sample line, when the width of a current luma block is greater than or equal to X1 and the height is greater than or equal to Y1, a 6-tap gaussian filter may be used. In other cases, a 4-tap gaussian filter may be used. In the second reference sample line, a 6-tap cubic filter may be used. In this case, in case of extended 130 directional intra prediction modes such as TIMD, a 64 fractional sample position may be used. In other cases, a 32 fractional sample position may be used.

Alternatively, according to another example, in the first reference sample line, a 6-tap cubic filter may be used. In the second reference sample line, when the width of a current luma block is greater than or equal to X1 and the height is greater than or equal to Y1, a 6-tap gaussian filter may be used. In other cases, a 4-tap gaussian filter may be used. In this case, in case of extended 130 directional intra prediction modes such as TIMD, a 64 fractional sample position may be used. In other cases, a 32 fractional sample position may be used. In the method, X1, Y1, X2 and Y2 may correspond to one value within a block size range. As an example, when a CTU size is 256, X1, Y1, X2 and Y2 may have a value between 4 and 256, and X1, Y1, X2 and Y2 may be a different value.

Meanwhile, a 4-tap cubic (weak), 6-tap cubic filter, 4-tap gaussian or 6-tap gaussian filter proposed in this embodiment is not limited to the example of Tables 3 to 10, and may have a filter coefficient different from that in the example.

In addition, a method proposed in this embodiment may be equally applied to a reference sample line applied in intra prediction fusion and MRL.

Meanwhile, information on whether to apply a method proposed in this embodiment may be transmitted in a VPS, a SPS, a PPS, a picture header, a slice header and DCI that are a high-level syntax (HLS). As an example, information on whether to apply a method proposed in this embodiment within a specific unit (e.g., a PPS) may be signaled to determine whether to apply a method proposed in this embodiment in a specific unit (e.g., a PPS).

In addition, a method proposed in this embodiment, as in the method, may adaptively select whether to apply without transmitting additional information to a decoder, or may transmit additional information on whether to apply a method proposed in this embodiment to a decoder and determine whether to apply. As an example, whether to apply a method proposed in this embodiment in the unit of a CTU or a CU may be signaled by a 1-bit flag. Alternatively, when a method proposed in this embodiment may be applied according to the size or shape of a specific block or whether a specific condition exists, whether to apply a method proposed in this embodiment may be signaled by a 1-bit flag only in that case.

Meanwhile, based on information specifying whether a rule for selecting an interpolation filter at a high level according to an embodiment of the present disclosure, i.e., a high level syntax (HLS), is applied, whether to signal corresponding information at a low level (e.g., a coding unit) may be adaptively determined. As an example, when information on whether to apply a method proposed in this embodiment at a high level (e.g., a SPS) is false (i.e., a method proposed in this embodiment is not used in a high level unit), corresponding information may not be signaled at a low level (e.g., a coding unit). In this case, an interpolation filter selection method proposed in this embodiment is not applied, and the signaling of information on whether to use accordingly may not be performed.

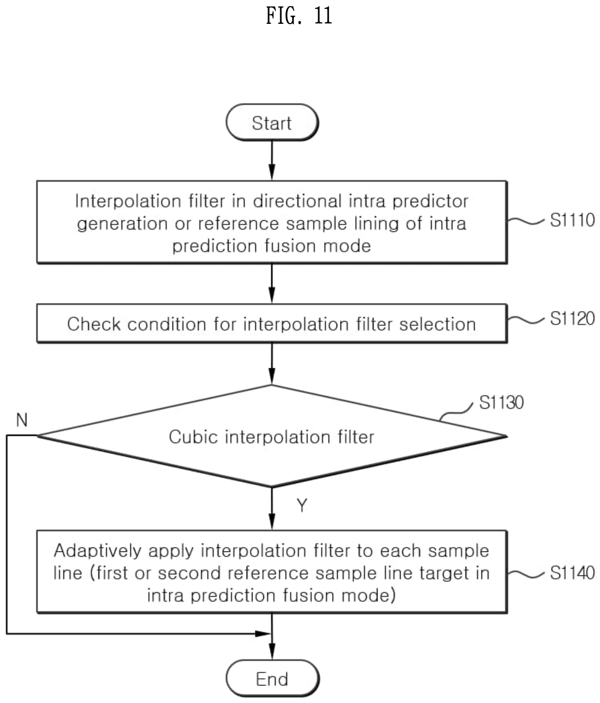

In this embodiment below, a method for efficiently selecting 4-tap and 6-tap interpolation filters in intra prediction fusion is described by referring to FIG. 11. FIG. 11 is a diagram showing a method performed in an encoder and a decoder according to an embodiment of the present disclosure. FIG. 11 may be an image encoding method or an image decoding method. As an example, FIG. 11 may be based on reference sample lining of an intra prediction fusion mode being allowed or based on a predictor being generated based on a directional intra prediction mode S1110.

As an example, when intra prediction fusion is applied in a directional intra prediction mode, the interpolation filtering of the first reference sample line and the second reference sample line may be required. In this case, since the trends of the first reference sample line and the second reference sample line are different, a different interpolation filtering technique may be required. This embodiment proposes a method for adaptively applying the interpolation filtering of the first reference sample line and the second reference sample line in intra prediction fusion. In other words, a method proposed in this embodiment may apply an interpolation filter to the first reference sample line and the second reference sample line differently. For this, a condition for selecting an interpolation filter may be confirmed S1120. A condition for selecting an interpolation filter may include whether a specific intra prediction mode is applied to a current block. Afterwards, according to whether a corresponding condition is satisfied, whether to use a cubic interpolation filter may be determined S1130. As described above, when a 130 directional mode which is twice a 65 directional mode in the existing VVC is used as in TIMD, a 64 fractional sample position-based 6-tap cubic filter may be used, and in case of a 65 directional mode, a 32 fractional sample position-based 6-tap cubic filter may be used. In ECM, a 4-tap cubic interpolation filter is used for directional mode prediction in a reference sample area for template matching in TIMD, and a 64 fractional sample position-based 4-tap cubic filter may be used for extended 130 directional intra prediction modes. In this case, in ECM, a 32 fractional sample position-based 4-tap weak interpolation filter may be used for reference sample lining.

This embodiment proposes a method for adaptively applying an interpolation filter when a cubic filter is selected in intra directional prediction in intra prediction fusion as follows S1140.

As an example, in intra directional prediction, a 6-tap cubic filter may be used in the first reference sample line, and a 4-tap cubic filter may be used in the second reference sample line. In case of extended 130 directional intra prediction modes such as TIMD, a 64 fractional sample position may be used. In other cases, a 32 fractional sample position may be used. Alternatively, only a 6-tap or 4-tap gaussian filter may always be applied in the second reference sample line as follows.

As an example, in intra directional prediction, a 6-tap cubic filter may be used in the first reference sample line, a 6-tap gaussian filter may be used in the second reference sample line when the width of a current luma block is greater than or equal to X1 and the height is greater than or equal to Y1, and a 4-tap gaussian filter may be used in other cases. In case of extended 130 directional intra prediction modes such as TIMD, a 64 fractional sample position may be used, and in other cases, a 32 fractional sample position may be used. In this embodiment, X1, Y1, X2 and Y2 may have a value within a block size range. In this case, the value of each variable may be different. As an example, when a CTU size is 256, X1, Y1, X2 and Y2 may have a value between 4 and 256.

The following embodiment describes a method for adaptively performing the selection of an interpolation filter in reference sample lining in intra prediction fusion as follows.

As an embodiment, in reference sample lining, a 4-tap or 6-tap cubic filter may be used in the first reference sample line, and a 4-tap cubic filter may be used in the second reference sample line. In case of extended 130 directional intra prediction modes such as TIMD, a 64 fractional sample position may be used. In other cases, a 32 fractional sample position may be used.

Alternatively, as in the following embodiment, only a 6-tap or 4-tap gaussian filter may always be applied in the second reference sample line. In reference sample lining, a 4-tap or 6-tap cubic filter may be used in the first reference sample line. In the second reference sample line, when the width of a current luma block is greater than or equal to X1 and the height is greater than or equal to Y1, a 6-tap gaussian filter may be used. In other cases, a 4-tap gaussian filter may be used. In this case, in case of extended 130 directional intra prediction modes such as TIMD, a 64 fractional sample position may be used, and in other cases, a 32 fractional sample position may be used. In the method, X1, Y1, X2 and Y2 may have a value within a block size range. As an example, when a CTU size is 256, X1, Y1, X2 and Y2 may have a value between 4 and 256.

Meanwhile, a 4-tap cubic (weak) filter, 6-tap cubic filter, 4-tap gaussian or 6-tap gaussian filter proposed in this embodiment is not limited to the example of Tables 3 to 10, and may have a filter coefficient different from that in the example.

In addition, a method proposed in this embodiment may be equally applied to a reference sample line applied in intra prediction fusion and MRL.

Whether a method proposed in this embodiment is applied may be transmitted in a VPS, a SPS, a PPS, a picture header, a slice header and DCI that are a high-level syntax (HLS). As an example, in order to determine whether to apply a method proposed in this embodiment in the unit of a PPS, information representing whether to apply a method proposed in this embodiment may be signaled as information in a PPS.

In addition, a method proposed in this embodiment may adaptively select an interpolation filter without transmitting additional information to a decoder according to a rule shared between a decoder and an encoder which is predefined to determine whether to apply an interpolation filter, or may signal additional information to a decoder. As an example, whether to apply a method proposed in this embodiment in the unit of a CTU or a CU may be transmitted by using a 1-bit flag. Alternatively, when a method proposed in this embodiment may be applied according to the size or shape of a specific block or whether a specific condition exists, whether to apply an interpolation filter proposed in the present disclosure may be transmitted to a decoder by using a 1-bit flag only in that case.

Meanwhile, as an example, whether to signal information on the application of an interpolation filter at a low level (e.g., a coding unit) may be adaptively determined according to information representing whether to apply an interpolation filter at a high level defined in a HLS. As an example, when corresponding information is false in a SPS (i.e., a method proposed in this embodiment is not used in the unit of a SPS), an interpolation filter is not selected for a coding unit that is a low level as described in the present disclosure, and the signaling of information on whether to apply an interpolation filter may also not be performed.

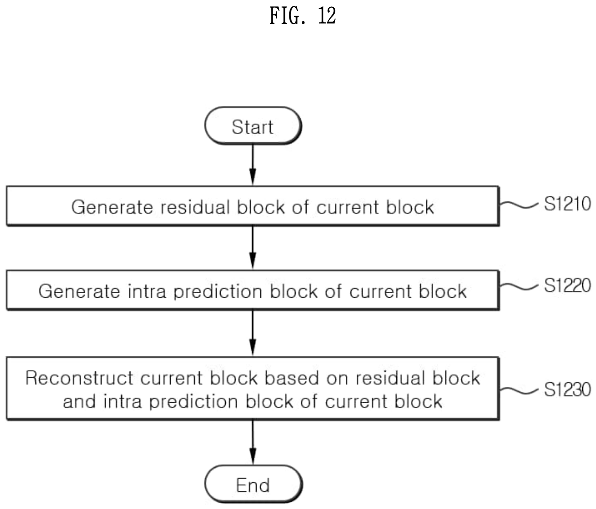

FIG. 12 is a diagram showing an image decoding method according to an embodiment of the present disclosure. As an example, an image decoding method in FIG. 12 may be performed by an image decoding apparatus, and may be based on the embodiment. As another example, FIG. 12 may be an image encoding method. In this case, an image encoding method in FIG. 12 may be performed by an image encoding apparatus.

As an example, a residual block for a current block may be generated S1210. Afterwards, a prediction block for a current block may be generated based on the intra prediction mode of a current block S1220. In addition, a current block may be reconstructed based on a generated residual block and a prediction block S1230.

As an example, a prediction block may be generated further based on an interpolation filter applied to a reference sample, and for an interpolation filter, as described above, an interpolation filter may be adaptively determined based on the intra prediction mode of a current block.

As an example, based on the intra prediction mode of a current block being a directional intra prediction mode (i.e., when an intra prediction mode is a directional intra prediction mode), an interpolation filter may be determined as a 6-tap cubic filter. Based on an intra prediction mode being a template-based intra mode derivation(TIMD)-based directional intra prediction mode, an interpolation filter may be determined as a 6-tap cubic filter. In addition, based on an intra prediction mode being a directional intra prediction mode (or an angular intra prediction mode) performing reference sample lining, an interpolation filter may be determined as a 6-tap cubic filter. Meanwhile, based on the intra prediction mode of a current block being a directional intra prediction mode, the fractional sample position of an interpolation filter may be different. As an example, based on an intra prediction mode being based on the first directional intra prediction mode (i.e., when an intra prediction mode is based on the first directional intra prediction mode), an interpolation filter may be determined as a 64 fractional sample position-based 6-tap cubic filter, and based on an intra prediction mode being based on the second directional intra prediction mode, an interpolation filter may be determined as a 32 fractional sample position-based 6-tap cubic filter. As an example, the first directional intra prediction mode may be a 130 directional intra prediction mode (i.e., a directional intra prediction mode including 130 intra prediction modes), and the second directional intra prediction mode may be a 65 directional intra prediction mode (i.e., a directional intra prediction mode including 65 intra prediction modes). Meanwhile, as another example, based on an intra prediction mode being a directional intra prediction mode performing reference sample lining, an interpolation filter may be determined as one of a 4-tap or 6-tap gaussian filter. In addition, as an example, based on an intra prediction mode being an intra prediction fusion mode, the interpolation filter of the first reference sample line and the interpolation filter of the second sample line may be determined as one of a gaussian filter or a cubic filter, respectively. As another example, based on the intra prediction mode of a current block being an intra prediction fusion mode, an interpolation filter may be determined based on the size of the luma component block of a current block. More specifically, based on the width or height of a luma component block (e.g., based on a comparison between the width or height of a luma component block and a specific value (e.g., a predefined threshold value)), an interpolation filter to be applied to the first reference sample line and the second reference sample line may be determined, respectively. In this case, a condition used when determining the interpolation filter of the first reference sample and a condition used when determining the interpolation filter of the second reference sample may be different. Meanwhile, as an example, based on an intra prediction mode being an intra prediction fusion mode, the interpolation filters of the first reference sample line and the second sample line may be determined as a different number of taps or a different type of filter.

In describing an image decoding method in FIG. 12, a description that overlaps with the description is partially omitted. Meanwhile, FIG. 12 is an embodiment of the present disclosure, so some steps may be added, changed or deleted, and the order of steps may be changed.

According to the embodiment of the present disclosure, an interpolation filter may be efficiently generated to improve coding efficiency, and more filter coefficient storage space may be secured to reduce memory waste.

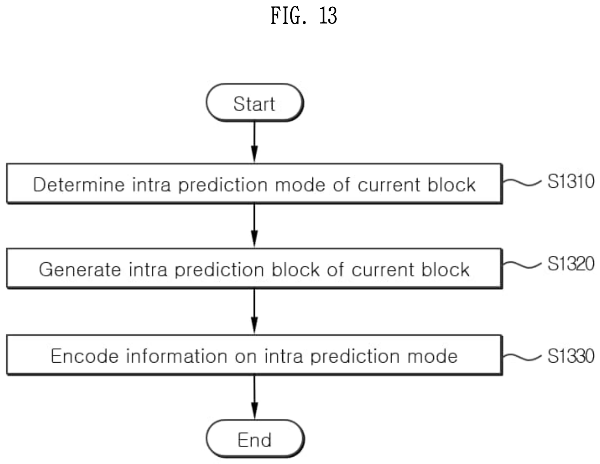

FIG. 13 is a diagram showing an image encoding method according to an embodiment of the present disclosure. An image encoding method in FIG. 13 may be performed by an image encoding apparatus, and may be based on the above-described embodiment.

As an example, the intra prediction mode of a current block may be determined S1310. Afterwards, the prediction block of a current block may be generated based on the intra prediction mode of a current block S1320. In addition, information on an intra prediction mode may be encoded in a bitstream S1330.

In this case, a prediction block may be generated further based on an interpolation filter applied to a reference sample, and an interpolation filter may be adaptively determined based on the intra prediction mode of a current block. It is the same as described above by referring to other drawings including FIG. 12, so an overlapping description is omitted.

In describing an image encoding method in FIG. 13, a description that overlaps with the description is partially omitted. Meanwhile, FIG. 13 is an embodiment of the present disclosure, so some steps may be added, changed or deleted, and the order of steps may be changed.

According to the embodiment of the present disclosure, an interpolation filter may be efficiently generated to improve coding efficiency, and more filter coefficient storage space may be secured to reduce memory waste.

The exemplary methods of the present disclosure are described as a series of operations for clarity of explanation, but this is not intended to limit the order in which the steps are performed, and when necessary, each step may be performed simultaneously or in a different order. To implement the method according to the present disclosure, additional steps may be included in addition to the illustrated steps, some steps may be omitted while including the remaining steps, or some steps may be omitted while including additional steps.

In the present disclosure, the image encoding apparatus or the image decoding apparatus which performs a predetermined operation (step) may perform an operation (step) to check the execution conditions or situations of the corresponding operation (step). For example, when it is described that a predetermined operation is performed when a predetermined condition is satisfied, the image encoding apparatus or the image decoding apparatus may perform an operation to check whether the predetermined condition is satisfied before performing the predetermined operation.

The various embodiments of the present disclosure are not a listing of all possible combinations but are provided to illustrate representative aspects of the disclosure, and the elements described in the various embodiments may be applied independently or in combination with two or more elements.

Additionally, the various embodiments of the present disclosure may be implemented using hardware, firmware, software, or a combination thereof, etc. When implemented in hardware, the various embodiments may be implemented using one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), generalpurpose processors, controllers, microcontrollers, or microprocessors.

Additionally, the image decoding apparatus and the image encoding apparatus to which the embodiments of the present disclosure are applied may be included in various devices such as a multimedia broadcasting transmission/reception device, a mobile communication terminal, a home cinema video device, a digital cinema video device, a surveillance camera, a video conferencing device, a real-time communication device such as a video communication device, a mobile streaming device, a storage medium, a camcorder, a video-on-demand (VoD) service providing device, an over-the-top (OTT) video device, an internet streaming service providing device, a three-dimensional (3D) video device, a video telephony device, and a medical video device, and may be used for processing video signals or data signals. For example, an over the top (OTT) video device may include a game console, a Blu-ray player, an internet-connected TV, a home theater system, a smartphone, a tablet PC, and a digital video recorder (DVR), etc.

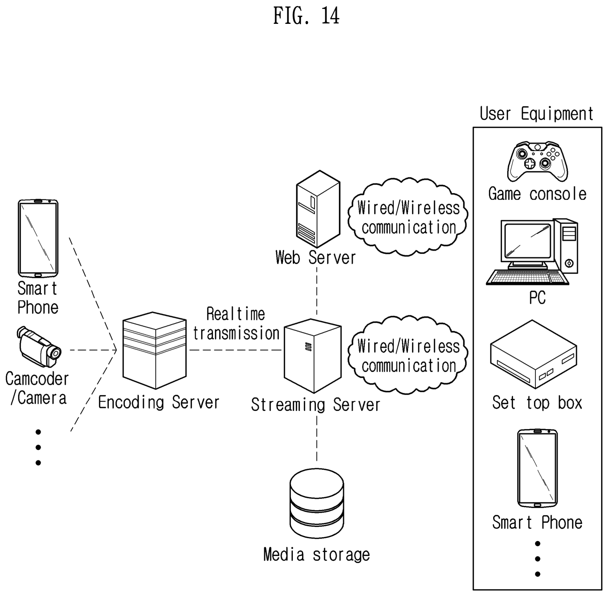

FIG. 14 shows an exemplary diagram of a content streaming system to which an embodiment of the present disclosure may be applied.

As shown in FIG. 14, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

## Claims

1. An image decoding method performed by an image decoding apparatus, comprising:

   generating a residual block for a current block;
   generating a prediction block for the current block based on an intra prediction mode; and
   reconstructing the current block based on the residual block and the prediction block,
   wherein the prediction block is generated further based on an interpolation filter applied to a reference sample,
   wherein the interpolation filter is adaptively determined based on the intra prediction mode, and
   wherein based on the intra prediction mode being a template-based intra mode derivation (TIMD)-based directional intra prediction mode, the interpolation filter is determined as a 6-tap cubic filter.

2. The method of Claim 1, wherein based on the intra prediction mode being a directional intra prediction mode performing a reference sample lining, the interpolation filter is determined as a 6-tap cubic filter.

3. The method of Claim 1, wherein based on the intra prediction mode being a directional intra prediction mode, the interpolation filter is determined as the 6-tap cubic filter.

4. The method of Claim 1, wherein based on the intra prediction mode being based on a first directional intra prediction mode, the interpolation filter is determined as a 64 fractional sample position-based 6-tap cubic filter, and
   wherein based on the intra prediction mode being based on a second directional intra prediction mode, the interpolation filter is determined as a 32 fractional sample position-based 6-tap cubic filter.

5. The method of Claim 4, wherein the first directional intra prediction mode is a 130 directional intra prediction mode, and

wherein the second directional intra prediction mode is a 65 directional intra prediction mode.

6. The method of Claim 1, wherein based on the intra prediction mode being a directional intra prediction mode performing a reference sample lining, the interpolation filter is determined as one of a 4-tap or 6-tap gaussian filter.

7. The method of Claim 1, wherein based on the intra prediction mode being an intra prediction fusion mode, the interpolation filter of a first reference sample line and the interpolation filter of a second sample line are determined as one of a gaussian filter or a cubic filter, respectively.

8. The method of Claim 7, wherein based on the intra prediction mode being the intra prediction fusion mode, the interpolation filter is determined based on a size of a luma block of the current block.

9. The method of Claim 1, wherein based on the intra prediction mode being an intra prediction fusion mode, the interpolation filter of a first reference sample line and a second sample line is determined as a different number of taps or a different type of a filter.

10. An image encoding method performed by an image encoding apparatus, comprising:

   determining an intra prediction mode of a current block;
   generating an intra prediction block of the current block based on the intra prediction mode; and
   encoding information on the intra prediction mode,
   wherein the prediction block is generated further based on an interpolation filter applied to a reference sample,
   wherein the interpolation filter is adaptively determined based on the intra prediction mode, and
   wherein based on the intra prediction mode being a template-based intra mode derivation (TIMD)-based directional intra prediction mode, the interpolation filter is determined as a 6-tap cubic filter.

11. A non-transitory computer readable recording medium storing a bitstream generated by the image encoding method of Claim 10.

12. A method for transmitting a bitstream generated by an image encoding method, the image encoding method comprising:

   determining an intra prediction mode of a current block;
   generating an intra prediction block of the current block based on the intra prediction mode; and
   encoding information on the intra prediction mode,
   wherein the prediction block is generated further based on an interpolation filter applied to a reference sample,
   wherein the interpolation filter is adaptively determined based on the intra prediction mode, and
   wherein based on the intra prediction mode being a template-based intra mode derivation (TIMD)-based directional intra prediction mode, the interpolation filter is determined as a 6-tap cubic filter.

FIG.1

```
        10                              20
  ┌──────────────────┐         ┌──────────────────┐
  │ ┌──────────────┐ │         │ ┌──────────────┐ │
11─┤ │VIDEO SOURCE  │ │         │ │  RENDERER    │ ├─23
  │ │ GENERATOR    │ │         │ └──────────────┘ │
  │ └──────────────┘ │         │        ▲         │
  │        │         │         │ ┌──────────────┐ │
12─┤ ┌──────────────┐ │         │ │  DECODER     │ ├─22
  │ │  ENCODER     │ │         │ └──────────────┘ │
  │ └──────────────┘ │         │        ▲         │
  │        │         │         │ ┌──────────────┐ │
13─┤ ┌──────────────┐ │────────▶│ │  RECEIVER    │ ├─21
  │ │ TRANSMITTER  │ │         │ └──────────────┘ │
  │ └──────────────┘ │         │                  │
  └──────────────────┘         └──────────────────┘
```

**FIG.2**

FIG.3

FIG.4

START

CONSTRUCT MPM LIST — S400

DETERMINE INTRA PREDICTION MODE OF CURRENT BLOCK — S410

ENCODE INTRA PREDICTION MODE INFORMATION
(INCLUDING MPM FLAG, NOT PLANAR FLAG, MPM IDX
AND/OR REMAINING INTRA PREDICTION MODE INFORMATION) — S420

END

# FIG. 5

START

OBTAIN INTRA PREDICTION MODE INFORMATION (INCLUDING MPM FLAG, NOT PLANAR FLAG, MPM IDX AND/OR REMAINING INTRA PREDICTION MODE INFORMATION) FROM BITSTREAM ⟶ S510

CONSTRUCT MPM LIST ⟶ S520

DETERMINE INTRA PREDICTION MODE OF CURRENT BLOCK BASED ON MPM LIST AND INTRA PREDICTION MODE INFORMATION ⟶ S530

END

FIG. 6

FIG. 7

```
                        ┌─────────┐
                        │  Start  │
                        └─────────┘
                             │
                             ▼
   ┌──────────────────────────────────────────────────┐
   │ Interpolation filter-based intra prediction, TIMD │──  S710
   │   template matching or reference sample lining     │
   └──────────────────────────────────────────────────┘
                             │
                             ▼
   ┌──────────────────────────────────────────────────┐
   │ Check condition for interpolation filter selection │──  S720
   └──────────────────────────────────────────────────┘
                             │
                             ▼
                                                        S730
   N        ◇────────────────────────────────◇
   ┌────────            Cubic (or weak)
   │                 interpolation filter
   │        ◇────────────────────────────────◇
   │                        │
   │                        │ Y
   │                        ▼
   │  ┌──────────────────────────────────────────────────┐
   │  │ Apply 64 or 32 fractional sample position-based 6- │──  S740
   │  │     tap cubic interpolation filter                 │
   │  └──────────────────────────────────────────────────┘
   │                        │
   └────────────────────────┤
                            ▼
                       ┌─────────┐
                       │   End   │
                       └─────────┘
```

FIG. 8

```
                        ┌─────────┐
                        │  Start  │
                        └────┬────┘
                             │
                             ▼
  ┌────────────────────────────────────────────────────┐
  │ Interpolation filter-based intra prediction, TIMD   │ ～ S810
  │   template matching or reference sample lining      │
  └────────────────────────┬───────────────────────────┘
                           │
                           ▼
  ┌────────────────────────────────────────────────────┐
  │  Check condition for interpolation filter selection │ ～ S820
  └────────────────────────┬───────────────────────────┘
                           │
                           ▼
        N          ◇────────────────────◇               ～ S830
  ┌────────────────     Cubic (or weak)    ────────────┐
  │                   interpolation filter              │
  │                ◇────────────────────◇               │
  │                           │ Y                       │
  │                           ▼                         │
  │   ┌──────────────────────────────────────────────┐ │
  │   │ Apply 64 fractional sample position-based 6-tap │ ～ S840
  │   │          cubic interpolation filter           │ │
  │   └───────────────────────┬──────────────────────┘ │
  │                           │                         │
  └───────────────────────────┤                         
                             ▼
                        ┌─────────┐
                        │   End   │
                        └─────────┘
```

FIG. 9

Start

Interpolation filter-based intra prediction, TIMD template matching or reference sample lining — S910

Apply 64 or 32 fractional sample position-based 4-tap or 6-tap gaussian interpolation filter — S920

End

FIG. 10

```
                        ┌─────────┐
                        │  Start  │
                        └────┬────┘
                             │
                             ▼
     ┌────────────────────────────────────────────┐
     │ Interpolation filter for directional intra  │        S1010
     │ predictor generation of intra prediction    │
     │ fusion mode                                  │
     └──────────────────┬─────────────────────────┘
                        │
                        ▼
     ┌────────────────────────────────────────────┐
     │ Check condition for interpolation filter    │        S1020
     │ selection                                    │
     └──────────────────┬─────────────────────────┘
                        │
                        ▼
              ◇────────────────────◇                          S1030
  N  ◇─────────  Gaussian interpolation  ─────────◇
              ◇        filter        ◇
              ◇────────────────────◇
                        │ Y
                        ▼
     ┌────────────────────────────────────────────┐
     │ Adaptively apply interpolation filter to    │        S1040
     │ each sample line (first or second reference │
     │ sample line target in intra prediction      │
     │ fusion mode)                                 │
     └──────────────────┬─────────────────────────┘
                        │
                        ▼
                  ┌─────────┐
                  │   End   │
                  └─────────┘
```

FIG. 11

```
                          ( Start )
                              |
                              v
+----------------------------------------------------------+
| Interpolation filter in directional intra predictor      |
| generation or reference sample lining of intra           |~ S1110
| prediction fusion mode                                   |
+----------------------------------------------------------+
                              |
                              v
+----------------------------------------------------------+
| Check condition for interpolation filter selection       |~ S1120
+----------------------------------------------------------+
                              |
                              v
                                                     S1130
       N            /                    \
  +--------------- <  Cubic interpolation filter  >
  |                 \                    /
  |                              |
  |                              v Y
  |    +----------------------------------------------------+
  |    | Adaptively apply interpolation filter to each sample|
  |    | line (first or second reference sample line target in|~ S1140
  |    | intra prediction fusion mode)                       |
  |    +----------------------------------------------------+
  |                              |
  +----------------------------->|
                              v
                           ( End )
```

FIG. 12

FIG. 13

```
                    ┌─────────┐
                    │  Start  │
                    └────┬────┘
                         │
                         ▼
  ┌──────────────────────────────────────────────┐
  │ Determine intra prediction mode of current block │───~ S1310
  └──────────────────────┬───────────────────────┘
                         │
                         ▼
  ┌──────────────────────────────────────────────┐
  │  Generate intra prediction block of current block │───~ S1320
  └──────────────────────┬───────────────────────┘
                         │
                         ▼
  ┌──────────────────────────────────────────────┐
  │   Encode information on intra prediction mode   │───~ S1330
  └──────────────────────┬───────────────────────┘
                         │
                         ▼
                    ┌─────────┐
                    │   End   │
                    └─────────┘
```

FIG. 14

Smart Phone

Camcoder /Camera

Encoding Server

Realtime transmission

Web Server

Streaming Server

Media storage

Wired/Wireless communication

Wired/Wireless communication

User Equipment

Game console

PC

Set top box

Smart Phone

## INTERNATIONAL SEARCH REPORT

| | International application No. |
|---|---|
| | **PCT/KR2024/000093** |

| | |
|---|---|
| **A.** | **CLASSIFICATION OF SUBJECT MATTER** |
| | **H04N 19/59**(2014.01)i; **H04N 19/117**(2014.01)i; **H04N 19/159**(2014.01)i |

According to International Patent Classification (IPC) or to both national classification and IPC

| | |
|---|---|
| **B.** | **FIELDS SEARCHED** |

Minimum documentation searched (classification system followed by classification symbols)

    H04N 19/59(2014.01); H04N 19/00(2014.01); H04N 19/105(2014.01); H04N 19/11(2014.01); H04N 19/134(2014.01); H04N 19/159(2014.01); H04N 19/593(2014.01)

Documentation searched other than minimum documentation to the extent that such documents are included in the fields searched

    Korean utility models and applications for utility models: IPC as above
    Japanese utility models and applications for utility models: IPC as above

Electronic data base consulted during the international search (name of data base and, where practicable, search terms used)

    eKOMPASS (KIPO internal) & keywords: 복호화(decoding), 잔차(residual), 인트라(intra), 예측(predict), 모드(mode), 복원 (reconstruct), 보간(interpolate), 필터(filter)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | WO 2022-247884 A1 (BEIJING BYTEDANCE NETWORK TECHNOLOGY CO., LTD. et al.) 01 December 2022 (2022-12-01)<br>    See paragraphs [0053] and [0086]-[0088]; claims 1, 26-32, 42, 46 and 99; and figures 3 and 12. | 1-12 |
| Y | US 2022-0201329 A1 (QUALCOMM INCORPORATED) 23 June 2022 (2022-06-23)<br>    See paragraphs [0026], [0061], [0122], [0135] and [0137]; claims 1-3, 6 and 13; and figures 3-4. | 1-12 |
| Y | COBAN, Muhammed et al. Algorithm description of Enhanced Compression Model 7 (ECM 7). JVET-AB2025, Joint Video Experts Team (JVET) of ITU-T SG 16 WP 3 and ISO/IEC JTC 1/SC 29, 28th Meeting. Mainz, DE. pp. 1-62, 22 December 2022.<br>    See page 10. | 7-9 |
| A | US 2019-0379891 A1 (INDUSTRY ACADEMY COOPERATION FOUNDATION OF SEJONG UNIVERSITY) 12 December 2019 (2019-12-12)<br>    See claims 1-14. | 1-12 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 March 2024** | **27 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2024/000093** |

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022-268623 A1 (INTERDIGITAL VC HOLDINGS FRANCE, SAS) 29 December 2022 (2022-12-29)<br>See claims 2-17. | 1-12 |

Form PCT/ISA/210 (second sheet) (July 2022)

EP 4 648 417 A1

**INTERNATIONAL SEARCH REPORT**
Information on patent family members

International application No.

**PCT/KR2024/000093**

| Patent document cited in search report | | | Publication date (day/month/year) | Patent family member(s) | | | Publication date (day/month/year) |
|---|---|---|---|---|---|---|---|
| WO | 2022-247884 | A1 | 01 December 2022 | None | | | |
| US | 2022-0201329 | A1 | 23 June 2022 | CN | 116648911 | A | 25 August 2023 |
| | | | | EP | 4268459 | A1 | 01 November 2023 |
| | | | | JP | 2023-553882 | A | 26 December 2023 |
| | | | | KR | 10-2023-0123949 | A | 24 August 2023 |
| | | | | KR | 20230123949 | A | 24 August 2023 |
| | | | | WO | 2022-140765 | A1 | 30 June 2022 |
| US | 2019-0379891 | A1 | 12 December 2019 | CN | 109845254 | A | 04 June 2019 |
| | | | | CN | 109845254 | B | 26 January 2024 |
| | | | | EP | 3528497 | A1 | 21 August 2019 |
| | | | | JP | 2022-020630 | A | 01 February 2022 |
| | | | | JP | 6953523 | B2 | 27 October 2021 |
| | | | | US | 11792409 | B2 | 17 October 2023 |
| | | | | US | 2023-0101636 | A1 | 30 March 2023 |
| | | | | WO | 2018-070790 | A1 | 19 April 2018 |
| WO | 2022-268623 | A1 | 29 December 2022 | None | | | |

Form PCT/ISA/210 (patent family annex) (July 2022)

44